(19) Europäisches Patentamt

European Patent Office

Office européen des brevets

(11) **EP 1 061 691 A2**

(12) **EUROPEAN PATENT APPLICATION**

(43) Date of publication:
20.12.2000 Bulletin 2000/51

(51) Int. Cl.⁷: **H04L 7/033**

(21) Application number: 00111934.6

(22) Date of filing: 15.06.2000

(84) Designated Contracting States:
**AT BE CH CY DE DK ES FI FR GB GR IE IT LI LU
MC NL PT SE**
Designated Extension States:
**AL LT LV MK RO SI**

(30) Priority: 15.06.1999 JP 16870399
06.08.1999 JP 22391299

(71) Applicant:
**MATSUSHITA ELECTRIC INDUSTRIAL CO., LTD.
Kadoma-shi, Osaka-fu, 571 (JP)**

(72) Inventor: **Asano, Hiroaki
Katano-shi, Osaka-fu (JP)**

(74) Representative:
**Lang, Johannes, Dipl.-Ing. et al
Bardehle Pagenberg Dost Altenburg Geissler
Isenbruck,
Postfach 86 06 20
81633 München (DE)**

(54) **Digital pll circuit for burst-mode data and optical receiving circuit using the same**

(57) In a digital PLL circuit (1), a clock generator (2) generates, from a system clock, $n$ clock signals (where $n$ is a positive integer) having different phases one another by $1/n$. A sampling circuit (3) generates $1^{st}$ to $n^{th}$ sampled burst-mode data by sampling received burst-mode data utilizing the $n$ clock signals. A preamble detector (4) detects a head of the burst-mode data from the $1^{st}$ to $n^{th}$ sampled burst-mode data, and then detects an optimal phase potion for the head of the burst-mode data by referring to phase positions of the $n$ clock signals. A clock phase adjuster (5) detects an edge position of the burst-mode data from the $1^{st}$ to $n^{th}$ sampled burst-mode data, and according to the detected edge positions, adjusting the phase positions of the clock signals with reference to the optimal phase position detected by the preamble detector. In this manner, the digital PLL circuit (1) can correctly recover only the burst-mode data from the head thereof even when noise is superimposed on a non signal period.

Fig. 1

**Description**

BACKGROUND OF THE INVENTION

Field of the Invention

The present invention relates to digital phase locked loop circuits (hereinafter, PLL circuits), and more specifically to a digital PLL circuit recovering a clock signal according to received burst-mode data, and adjusting a phase thereof in such a manner as to synchronize with an optimal position of each bit of the burst-mode data.

Description of the Background Art

In a point-to-multipoint network where a center station is connected to a plurality of terminals, two-way data communication is carried out among the terminals in which frequency synchronization is established. On reception of data from the terminals, the center station determines a phase thereof and then recovers a clock based on the determined phase so that the received data is recovered. Such data recovery is exemplarily found in ISSCC '93 TA6.4 (hereinafter, first conventional example).

The first conventional example is described in detail below. In the first conventional example, a reception terminal first instantaneously determines a phase of received data; recovers a clock; and discriminates the received data according to the recovered clock. A first and a second Voltage Controlled Oscillators (VCOs) are utilized therefor, and are structured to oscillate responding to a gate signal. An oscillating frequency of the first and second VCOs is synchronized with that of a system clock. When the received data indicates "High", the first VCO starts oscillating after its initial phase set to "0". When the received data transits from "High" to "Low", the first VCO stops oscillating but the second VCO simultaneously starts oscillating with its initial phase set to "0". When the received data transits from "Low" to "High", the second VCO then stops oscillating. Accordingly, the first VCO keeps oscillating as long as the received data indicates "High", and the second VCO "Low". A logical sum of output signals from the first and second VCOs is regarded as a clock recovered based on the received data.

In the first conventional example, it is required to fully suppress pulse width distortion of burst-mode data, which is the received data. If the distortion is fully suppressed, a falling edge (tail) of the recovered clock correctly comes to the center of each bit. Accordingly, the received burst-mode data is sampled utilizing the falling edge and then correctly discriminated.

On the other hand, with the pulse width distortion observed, the burst-mode data may not be correctly discriminated in some cases. For instance, if a bit indicating "High" is narrowed in width to about half due to the pulse width distortion, the burst-mode data may not be correctly sampled utilizing the falling edge of the recovered clock.

Further, in the first conventional example, the first and second VCOs may not be equalized to a preset system clock in oscillating frequency, or an error in oscillating frequency may be generated thereamong due to noise, for example. If data is recovered under such circumstance, a phase of the recovered clock may move off, by degrees, from a centric position of the bit during continuity of bits indicating the same level ("High or "Low"). It may result in erroneous discrimination of the burst-mode data.

A second and a third conventional examples next below are proposed to get around such problem in the first.

Details of the second conventional example are disclosed in Japanese Patent Laying-Open No. 9-36849 (97-36849). Therein, with reference to a system clock used in a reception terminal, a transition point of data is detected for every two clock periods. According to a transition pattern of the data, a leading and a falling edges are detected, and a center point therebetween is determined as an optimal phase position. At the optimal phase position, a clock for data discrimination is located. As such, the leading and falling edges are always monitored for adjustment of the phase position of the clock, whereby the problem in the first conventional example is solved. Further, for detection of the optimal phase position, with concern about pulse width distortion and/or jitter, the second conventional example makes it preferable to calculate an average for several two-clock-period-based phase positions utilizing an integrator.

The third conventional example is a technique disclosed in Japanese Patent Laying-Open No. 8-237117 (96-237117). Therein, an average in position is taken for falling edges of received data, and an optimal phase position is determined based on information about the average. Thereafter, the number of transition points is detected in one-bit width, where the optimal phase position is centered. Herein, two transition points therein mean that pulse width distortion and/or jitter is occurred in the received data. In such case, a center value of these two transition points is taken as optimal phase position, and thus an influence of pulse width distortion and/or jitter is prevented for discrimination of the received data. On the other hand, one or no transition point means that the received data has no pulse width distortion. Therefore, the optimal phase position remains the same.

In the above second and third conventional examples, the average is calculated for the transition points in several bits before selecting the optimal phase position. The problem herein is, the average may be calculated including transition points erroneously detected in a non signal period. The non signal period is an interval where a circuit utilizing the second and third conventional examples do not receive data, and supposedly no data is sent out from an AGC amplifier preceding to the circuit in the non signal period. Such erroneous detection is caused by noise to be occurred therein as the noise is mistakenly regarded as randomly-generated data. As a result, recovery for a clock having a correct phase position cannot be done in the vicinity of a head of the burst-mode data (that is, at the beginning of a signal period, which is located after the non signal period and data reception is made therein).

To get around such problem, in the second and third conventional examples, a comparator in the last stage of the AGC amplifier is provided with a hysteresis function, whereby an output signal of the AGC amplifier is fixedly set to "0" when there is no burst-mode data (non signal period). With the hysteresis function, a reference signal shifts in value with respect to an incoming signal depending on an output from the comparator. Accordingly, the AGC amplifier can output a signal indicating "0" in level without amplifying the noise occurred in the non signal period.

However, the hysteresis function lowers an SN ratio (Signal to Noise Ratio), in other words, a reception level for high-quality data communication with a low bit error rate suffers deterioration. The hysteresis function may cause no problem if the reference signal can be kept at the same shifting level to both output signals indicating "0" and "1". If it is impossible due to variation of devices realizing the hysteresis function, the comparator problematically enhances the pulse width distortion before outputting a signal.

A fourth conventional example is a data sheet of Lucent Technologies, titled "20Mb/s-60Mb/s Burst-Mode Clock and Data Recovery Integrated Circuit ATTDC221AJ32". The system shown in the data sheet is similar to the first conventional example, but the data recovery circuit therein is additionally provided with an elastic buffer. To the elastic buffer, received data is written according to a recovered clock. Reading from the elastic buffer is carried out utilizing a clock in the data recovery circuit, and thus the received data becomes free from uttering components. To the elastic buffer, a reset signal is provided immediately before receiving the burst-mode data. With the reset signal, the data recovery circuit adjusts timing for reading from the elastic buffer when writing is started, whereby reading is secured not to start before writing.

The problem in the fourth conventional example is that the clock is erroneously recovered due to noise occurred in the non signal period, and according to the erroneous clock recovered thereby, data is written into the elastic buffer. As a result, a writing position of data may be shifted from a preset position, and a writing position of data thus comes before the reading position. Due to such problem, for the worst, new data is overwritten in a not-yet-read data region, whereby data cannot be correctly read.

SUMMARY OF THE INVENTION

Therefore, an object of the present invention is to provide a digital PLL circuit for correctly discriminating burst-mode data from noise possibly included in a non signal period, and correctly recovering only the burst-mode data from the head thereof.

Another object of the present invention is to provide an optical receiving circuit for correctly receiving and recovering an optical burst-mode signal without a hysteresis function in a stage subsequent to an AGC amplifier.

The present invention has the following features to attain the objects above.

A first aspect of the present invention is directed to a digital PLL circuit recovering a clock signal according to received burst-mode data, and adjusting a phase thereof in such a manner as to synchronize with an optimal position of each bit of the burst-mode data, the circuit comprising:

a clock generator generating, from a system clock, $n$ clock signals (where $n$ is a positive integer) having different phases one another by $1/n$;

a sampling circuit generating $1^{st}$ to $n^{th}$ sampled burst-mode data by sampling the burst-mode data utilizing the $n$ clock signals generated by the clock generator;

a preamble detector detecting a head of the burst-mode data from the $1^{st}$ to $n^{th}$ sampled burst-mode data generated by the sampling circuit, and also detecting an optimal phase potion for the head of the burst-mode data by referring to phase positions of the $n$ clock signals generated by the clock generator; and

a clock phase adjuster detecting an edge position of the burst-mode data from the $1^{st}$ to $n^{th}$ sampled burst-mode data generated by the sampling circuit, and according to the detected edge position, adjusting the phase positions of the clock signals with reference to the optimal phase position detected by the preamble detector.

As described above, in the first aspect, the preamble detector detects the head of the burst-mode data. Therefore, the digital PLL circuit can correctly discriminate between the burst-mode data and any interval having the burst-mode data not transmitted.

Further, after the optimal phase position for the clock signals is detected according to the detected head of the burst-mode data, the clock phase adjuster detects the recently optimal phase position according to the edge positions of the burst-mode data. In this manner, even if the burst-mode data has pulse width distortion and/or jitter therein, the clock phase adjuster keeps locating the phase of the clock signal onto the optimal phase position with reference to the edge positions of the burst-mode data. Accordingly, the burst-mode data can correctly be discriminated.

Still further, the clock signals having different phases one another are generated according to a system clock, whereby synchronization in frequency between the system clock and the clock signals having different phases one another can be established easily and accurately. Since the clock signals are thus suppressed in frequency variation, the edge of the clock signal always comes to the center of each bit of the burst-mode data even if the burst-mode data has continuity of bits indicating the same level. Therefore, the data can be correctly discriminated.

According to a second aspect, in the first aspect, the clock phase adjuster

finds, every time the edge position is detected, a center point of the bit according to the detected edge position,

finds and stores an evaluation value relevant to a shift between the recently-set optimal phase position and the center point of the bit,

calculates, after the evaluation value is calculated for x times, an average for the recently-stored x evaluation values, and

adjusts the phase positions of the clock signals according to the calculated average.

As described above, in the second aspect, the phase positions of the clock signals are adjusted according to the average taken for x evaluation values. Therefore, jittering components are removed from the burst-mode data, and can be recovered by the clock signals always having the optimal phase position.

According to a third aspect, in the first aspect, when the preamble detector detects the head of the burst-mode data, the clock phase adjuster detects the edge positions of the burst-mode data from the 1$^{st}$ to $n^{th}$ sampled burst-mode data generated by the sampling circuit.

As described above, in the third aspect, the clock phase adjuster starts operating when the head of the burst-mode data is detected. In this manner, the phase positions of the clock signals are prevented from being erroneously detected in the non signal period of the burst-mode data. As a result, the burst-mode data can be discriminated with higher accuracy.

According to a fourth aspect, in the first aspect, the burst-mode data previously has an identification pattern set for specifying the head thereof, and

the preamble detector comprises:

$n$ shift registers for holding the 1$^{st}$ to $n^{th}$ sampled burst-mode data generated by the sampling circuit;

$n$ decoders each subsequently connected to the $n$ shift registers, and determining whether or not a bit pattern held by the corresponding shift register matches to the identification pattern; and

an identification pattern detector detecting the identification pattern from the burst-mode data according to a result determined by the $n$ decoders.

As described above, in the fourth aspect, $n$ decoders each independently operate to find the identification pattern from the 1$^{st}$ to $n^{th}$ sampled burst-mode data. In this manner, the head of the burst-mode data can be correctly specified, and thus the digital PLL circuit is prevented from erroneously operating due to confusion between the noise occurred in the non signal period and the burst-mode data. Accordingly, the digital PLL circuit can correctly discriminate between the noise in the non signal period and the burst-mode data.

According to a fifth aspect, in the fourth aspect, the number of bits $i$ held by each of the shift registers is predetermined, wherein

when any one or more of the decoders determines that a pattern of j bits (where $j$ is a natural number satisfying $j=i$) out of the $i$ bits held by the corresponding shift register matches to the identification pattern, the identification pattern detector decides that the identification pattern is detected from the burst-mode data.

As described above, in the fifth aspect, the decoders determine pattern matching by using bits as many as possible ($j$ bits), whereby the head of the burst-mode data can be detected with accuracy.

According to a sixth aspect, in the fifth aspect, when a series of q (where $q$ is a natural number satisfying $q<n$) decoders determine that a pattern of recent $k$ bits (where $k$ is a natural number satisfying $k<j$) out of the $i$ bits held by each corresponding shift register matches to the identification pattern, the identification pattern detector decides that the head of the burst-mode data is detected, wherein

the numbers $q$ and $k$ are so selected as to satisfy a bit error rate required for transmission quality.

As described above, in the sixth aspect, the decoders can also determine pattern matching with bits fewer in number ($k$ bits) while satisfying sufficiently-high transmission quality. Therefore, the head of the burst-mode data can swiftly be detected.

According to a seventh aspect, in the fourth aspect, the preamble detector further includes an initial phase position detector detecting a center point of bits at the head of the burst-mode data from the result determined by the $n$ decoders, and determining the detected center point as the optimal phase position for the clock signals.

After detected the identification pattern, the decoders can specify the clock signal whose phase position is useful for discriminating the burst-mode data. Therefore, if a plurality of decoders detect the identification pattern, the number of such useful phase positions are also plural. In the seventh aspect, the identification phase position detector detects the optimal phase position for these clock signals. Therefore, the digital PLL circuit can recover the clock signal having the optimal phase position for discrimination of the burst-mode data.

According to an eighth aspect, in the first aspect, the clock phase adjuster includes an edge detector detecting the edge positions of each bit of the burst-mode data, wherein

the edge detector includes:

an exclusive OR circuit calculating an exclusive OR, and detecting a transition point from "Low" to "High" or from "High" to "Low" in the burst-mode data; and
a decision circuit determining whether or not continuity of "High" or "Low" is observed after the transition point detected by the exclusive OR circuit, wherein

only when the continuity of "High" or "Low" is determined by the determination circuit, the transition point detected by the exclusive OR circuit is detected as the edge positions of the burst-mode data.

Noise is instantaneously occurred not only in the non signal period but in reception of the burst-mode data, therefore it is impossible to specify the transition point detected by the exclusive OR circuit as the one resulted from the burst-mode data or the one resulted from the noise. To get around such problem, in the eighth aspect, the decision circuit determines whether or not continuity of the same level is observed after detected any transition point in the exclusive OR circuit. In this manner, it prevents the decision circuit from detecting any level change possibly resulted from the noise as the transition point resulted from the burst-mode data. As a result, the clock phase adjuster stops adjusting the phase positions according to any transition points resulted from the noise, and thus the phase of the clock signal can always be adjusted to be on the correct position.

According to a ninth aspect, in the first aspect, the digital PLL circuit further comprises a discriminator discriminating, based on the phase positions adjusted by the clock phase adjuster, a bit to be received from the 1$^{st}$ to $n^{th}$ sampled burst-mode data generated by the sampling circuit.

As described above, in the ninth aspect, the discriminator operates with timing according to the optimally-adjusted phase position, whereby the bit to be received can be correctly discriminated.

According to a tenth aspect, in the ninth aspect, the discriminator includes:

a selector selecting, based on the phase positions adjusted by the clock phase adjuster, 1$^{st}$ to $p^{th}$ (where $p$ is a natural number satisfying p≦n) sampled burst-mode data from the 1$^{st}$ to $n^{th}$ sampled burst-mode data generated by the sampling circuit, and
a decision circuit determining, by majority, the bit to be received from the 1$^{st}$ to $P^{th}$ sampled burst-mode data selected by the selector.

In the case that the noise is superimposed on the burst-mode data, the bit may be discriminated to be in an erroneous value even if the clock signal having the optimally-adjusted phase position is used. In the tenth aspect, the 1$^{st}$ to $p^{th}$ sampled burst-mode data obtained by sampling utilizing the $p$ clock signals having the optimal phase position is first selected, and then the bit to be received is determined, by majority, from the selected 1$^{st}$ to $p^{th}$ sampled burst-mode data. In this manner, even if the noise is superimposed on the burst-mode data sampled by the optimal clock signal, the value of the bit can be accordingly correctly discriminated.

According to an eleventh aspect, in the first aspect, the digital PLL circuit further comprises an elastic buffer into which the bit discriminated by the discriminator is written according to the clock signals having the phase positions optimally adjusted by the clock phase adjuster, wherein

the bit written into the elastic buffer is read according to the system clock.

As described above, in the eleventh aspect, even if jitter is occurred in the burst-mode data, the elastic buffer absorbs the uttering components. Therefore, the bits (burst-mode data) read from the elastic buffer can be freed from the jitter components.

According to a twelfth aspect, in the eleventh aspect, writing and reading into/from the elastic buffer are done when the preamble detector detects the head of the burst-mode data.

As described above, in the twelfth aspect, even if any noise is observed before receiving the burst-mode data (non signal period), writing and reading into/from the elastic buffer is not carried out unless the preamble detector detects the head of the burst-mode data. In other words, the elastic buffer operates regardless of the noise, thereby rendering the writing position and the reading position consistent with each other.

A thirteenth aspect of the present invention is directed to an optical receiving circuit receiving an optical burst-mode signal, comprising:

an optical/electrical conversion device converting the received optical burst-mode signal into an electrical signal;

an amplifier amplifying the electrical signal converted by the optical/electrical device;

a comparator converting the electrical signal provided by the amplifier into digital data by comparing the electrical signal and a given reference signal; and

a digital PLL circuit receiving the digital data converted by the comparator, recovering a clock signal according to the burst-mode data, and adjusting a phase thereof in such a manner as to synchronize with an optimal position of each bit of the burst-mode data, wherein

the digital PLL circuit comprises:

a clock generator generating, from a system clock, $n$ clock signals (where $n$ is a positive integer) having different phases one another by $1/n$;

a sampling circuit generating 1st to $n$th sampled burst-mode data by sampling the burst-mode data utilizing the $n$ clock signals generated by the clock generator;

a preamble detector detecting a head of the burst-mode data from the 1st to $n$th sampled burst-mode data generated by the sampling circuit, and also detecting an optimal phase potion for the head of the burst-mode data by referring to phase positions of the $n$ clock signals generated by the clock generator; and

a clock phase adjuster detecting an edge position of the burst-mode data from the 1st to $n$th sampled burst-mode data generated by the sampling circuit, and according to the detected edge position, adjusting the phase positions of the clock signals with reference to the optimal phase position detected by the preamble detector.

As described above, in the thirteenth aspect, there is no more need to forcefully and fixedly set the output from the comparator to "0" in the non signal period. To be specific, the digital PLL circuit does not perform phase adjustment for the clock signals unless the head of the burst-mode data is detected, and thus the digital PLL circuit does not erroneously operate even if the noise is superimposed on the output from the comparator in the non signal period. In this manner, the comparator is freed from the hysteresis function, whereby the optical receiving circuit can keep the satisfactory reception level without lowering the SN ratio and the bit error rate.

A fourteenth aspect of the present invention is directed to an optical receiving circuit receiving an optical burst-mode signal, comprising:

an optical/electrical conversion device converting the received optical burst-mode signal into an electrical signal;

an amplifying circuit amplifying the electrical signal converted by the optical/electrical device;

a comparing circuit provided with a hysteresis characteristic which generates a reference signal variable in value, and compares the reference signal and the electrical signal amplified by the amplifying circuit for output as burst-mode data; and

a digital PLL circuit detecting the head of the burst-mode data provided by the comparing circuit, generating a PREAMBLE-DETECTED signal being a signal specifying the head, and then starting optimally adjusting the phase position of the clock signal recovered from the burst-mode data, wherein

the digital PLL circuit further feeds back the generated PREAMBLE-DETECTED signal to the comparing circuit, and

in response to the PREAMBLE-DETECTED signal fed back from the digital PLL circuit, the comparing circuit changes a value of the reference signal.

As described above, in the fourteenth aspect, the comparing circuit can distinguish between the signal period and the non signal period with the PREAMBLE-DETECTED signal fed back, and can use the reference signal differed in value depending on the signal period or the non signal period with the hysteresis characteristic provided. Therefore, the comparing circuit has no more need to use the reference signal offset in the signal period but the reference signal whose level is optimal and constant with respect to the electrical signal. As a result, in the signal period, the comparing circuit recovers the burst-mode data fully suppressed with pulse width distortion, and in the non signal period, carries out comparison processing by the offset reference signal. In this manner, erroneous operation can be prevented.

According to a fifteenth aspect, in the fourteenth aspect, the PREAMBLE-DETECTED signal generated by the digital PLL circuit indicates whether or not the head is detected/undetected, wherein

the comparing circuit includes

a hysteresis controller generating, in response to the PREAMBLE-DETECTED signal fed back from the digital PLL circuit, the reference signal variable in value; and

a comparator comparing the reference signal from the hysteresis controller and the electrical signal from the amplifying circuit, wherein

the hysteresis controller

generates the reference signal having the same value as a reference value of the electrical signal from the amplifying circuit if the received PREAMBLE-DETECTED signal indicates that the head is detected, and

generates the reference signal in a value being offset the reference value of the electrical signal from the amplifying circuit by a given value if the received PREAMBLE-DETECTED signal indicates that the head is undetected.

As described above, in the fifteenth aspect, the value of the reference signal is set to be equal to the reference value of the electrical signal. Accordingly, the comparator can carry out comparison processing with the reference signal in the optimal level, whereby the recovered burst-mode data can be fully suppressed with pulse width distortion. Further, the comparator carries out the comparison processing with the reference signal in a value being offset the reference value by a given value in the non signal period, whereby the noise component is not erroneously recovered as the burst-mode data.

According to a sixteenth aspect, in the fifteenth aspect, the electrical signal provided to the comparator is a bi-phase signal.

As described above, in the sixteenth aspect, the bi-phase signal varying in level in both directions of positive and negative with respect to the reference signal is inputted. Therefore, even if an optical power of receiving signal is low in the signal period, the comparing circuit can correctly carry out the comparison processing as long as the reference signal is set equal to the electrical signal.

According to a seventeenth aspect, in the fifteenth aspect, the given value is selected to be about double or three-times more than a distribution value of a thermal noise component occurred in the amplifying circuit.

As described above, in the seventeenth aspect, the given value is adequately provided with an allowance for the distribution value of the thermal noise component. In this manner, the comparing circuit is prevented from erroneously recovering the noise component in the non signal period as the burst-mode data.

According to an eighteenth aspect, in the fourteenth aspect, the digital PLL circuit comprises:

a clock generator generating, from a system clock, $n$ clock signals (where $n$ is a positive integer) having different phases one another by $1/n$;
a sampling circuit generating $1^{st}$ to $n^{th}$ sampled burst-mode data by sampling the burst-mode data utilizing the $n$ clock signals generated by the clock generator;
a preamble detector detecting a head of the burst-mode data from the $1^{st}$ to $n^{th}$ sampled burst-mode data generated by the sampling circuit, and also detecting an optimal phase potion for the head of the burst-mode data by referring to phase positions of the $n$ clock signals generated by the clock generator; and
a clock phase adjuster detecting an edge position of the burst-mode data from the $1^{st}$ to $n^{th}$ sampled burst-mode data generated by the sampling circuit, and according to the detected edge position, adjusting the phase positions of the clock signals with reference to the optimal phase position detected by the preamble detector, wherein
the preamble detector feeds back the generated PREAMBLE-DETECTED signal to the comparing circuit.

According to a nineteenth aspect, in the eighteenth aspect, the clock phase adjuster

finds, every time the edge position is detected, a center point of the bit according to the detected edge position,
finds and stores an evaluation value relevant to a shift between the recently-set optimal phase position and the center point of the bit,
calculates, after the evaluation value is calculated for x times, an average for the recently-stored x evaluation values, and
adjusts the phase positions of the clock signals according to the calculated average.

According to a twentieth aspect, in the eighteenth aspect, when received the PREAMBLE-DETECTED signal from the preamble detector, the clock phase adjuster starts detecting the edge positions of the burst-mode data outputted from the comparing circuit utilizing the $1^{st}$ to $n^{th}$ sampled burst-mode data generated by the sampling circuit.

According to a twenty-first aspect, in the eighteenth aspect, the burst-mode data outputted from the comparing circuit previously has an identification pattern set for specifying the head thereof, and

the preamble detector comprises:

$n$ shift registers for holding the $1^{st}$ to $n^{th}$ sampled burst-mode data generated by the sampling circuit;
$n$ decoders each subsequently connected to the $n$ shift registers, and determining whether or not a bit pattern held by the corresponding shift register matches to the identification pattern; and
an identification pattern detector detecting the identification pattern according to a result determined by the $n$ decoders.

According to a twenty-second aspect, in the twenty-first aspect, the number of bits $i$ held by each of the shift registers is predetermined, wherein

when any one or more of the decoders determines that a pattern of j bits (where $j$ is a natural number satisfying $j=i$) out of the $i$ bits held by the corresponding shift register matches to the identification pattern, the identification pattern detector decides that the identification pattern is detected.

According to a twenty-third aspect, in the twenty-second aspect, a series of $q$ (where $q$ is a natural number satisfying $q<n$) decoders determine that a pattern of recent $k$ bits (where $k$ is a natural number satisfying $k<j$) out of the $i$ bits held by each corresponding shift register matches to the identification pattern, the identification pattern detector decides that the identification pattern is detected, wherein

the numbers $q$ and $k$ are so selected as to satisfy a bit error rate required for transmission quality.

According to a twenty-fourth aspect, in the twenty-first aspect, the preamble detector further includes an initial phase position detector estimating a center point of bits in the identification pattern using the result determined by the $n$ decoders, and regarding the estimated center point as the optimal phase position for the clock signals.

According to a twenty-fifth aspect, in the eighteenth aspect, the clock phase adjuster includes an edge detector detecting the edge positions of each bit of the burst-mode data outputted from the comparing circuit, wherein

the edge detector includes:

an exclusive OR circuit calculating an exclusive OR, and detecting a transition point from "Low" to "High" or from "High" to "Low" in the burst-mode data outputted from the comparing circuit; and

a decision circuit determining whether or not continuity of "High" or "Low" is observed after the transition point detected by the exclusive OR circuit, wherein

only when the continuity of "High" or "Low" is determined by the determination circuit, the transition point detected by the exclusive OR circuit is detected as the edge positions of the burst-mode data.

According to a twenty-sixth aspect, in the eighteenth aspect, the optical receiving circuit further comprises a discriminator discriminating, based on the phase positions adjusted by the clock phase adjuster, a bit to be received from the 1st to $n^{th}$ sampled burst-mode data generated by the sampling circuit.

According to a twenty-seventh aspect, in the twenty-sixth aspect, the discriminator includes:

a selector selecting, based on the phase positions adjusted by the clock phase adjuster, 1st to $p^{th}$ (where $p$ is a natural number satisfying $p \leqq n$) sampled burst-mode data from the 1st to $n$th sampled burst-mode data generated by the sampling circuit; and

a decision circuit determining, by majority, the bit to be received from the 1st to $P^{th}$ sampled burst-mode data selected by the selector.

According to a twenty-eighth aspect, In the eighteenth aspect, the optical receiving circuit further comprises an elastic buffer into which the bit discriminated by the discriminator is written according to the clock signals having the phase positions optimally adjusted by the clock phase adjuster, wherein

the bit written into the elastic buffer is read according to the system clock.

According to a twenty-ninth aspect, in the twenty-eighth aspect, writing and reading into/from the elastic buffer are controlled by the PREAMBLE-DETECTED signal generated by the preamble detector.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram showing the structure of a digital PLL circuit 1 according to a first embodiment of the present invention;

FIGS. 2A and 2B are diagrams exemplarily showing, respectively, a waveform of incoming burst-mode data to the digital PLL circuit 1 and those of clock signals $clk_1$ to $clk_8$ generated in the digital PLL circuit 1 in FIG. 1;

FIG. 3 is a block diagram showing the detailed structure of a preamble detector 4 shown in FIG. 1;

FIG. 4 is a block diagram structurally showing the first stage of a circuit of an identification pattern detector 44 shown in FIG. 3;

FIG. 5 is a block diagram structurally showing the second stage of the circuit of the identification pattern detector 44 shown in FIG. 3;

FIG. 6 is a block diagram structurally showing the third stage of the circuit the identification pattern detector 44 shown in FIG. 3;

FIG. 7 is a block diagram showing the detailed structure of an initial phase position detector 45 shown in FIG. 3;

FIG. 8 is a diagram for explaining, in detail, a rule $\alpha$ in FIG. 7;

FIG. 9 is a diagram, relevant to the rule $\alpha$ in FIG. 8, for explaining a manner of selecting a clock signal $clk_{OPT}$ having an optimal phase position $\phi_{OPT}$;

FIG. 10 is a diagram, relevant also to the rule $\alpha$ in FIG. 8 as FIG. 9, for explaining a manner of selecting the clock signal $clk_{OPT}$ having the optimal phase position $\phi_{OPT}$;

FIG. 11 is a block diagram showing the detailed structure of a clock phase adjuster 5 shown in FIG. 1;

FIG. 12 is a block diagram showing the detailed structure of an edge detector 52 shown in FIG. 11;

FIGS. 13A and 13B are schematic diagrams each showing an exemplary burst-mode data waveform to be provided to the digital PLL circuit 1;

FIGS. 14A and 14B are diagrams each for explaining a relationship between an edge position $\phi_{EDGE}$ indicated by an EDGE POSITION generated by the edge detector 52 in FIG. 11 and a previous optimal phase position $\phi_{OPT}'$;

FIGS. 15A and 15B are diagrams each showing a relationship between an evaluation obtained by a selector 54 in FIG. 11 and a difference generated between a recent center point $CP_{PRE}$ and the previous optimal phase position $\phi_{OPT}'$;

FIGS. 16A and 16B are diagrams each explaining a manner of adjusting the phase position $\phi_{OPT}$ in an optimal phase position holder 51 in FIG. 11;

FIG. 17 is a block diagram showing the detailed structure of a data recovery circuit 6 in FIG. 1;

FIG. 18 is a diagram showing exemplary phase positions $\phi_{(b-1)}$ to $\phi_{(b+1)}$ selected by a selector 61 in FIG. 17;

FIG. 19 is a block diagram showing the structure of an optical receiving circuit 14 according to a second embodiment of the present invention;

FIG. 20 is a block diagram showing the structure of an optical receiving circuit 20 according to a third embodiment of the present invention;

FIGS. 21A, 21B, and 21C are diagrams each showing an exemplary waveform of an optical burst-mode signal, a bi-phase signal and a reference signal, and an output signal from an inverter 224;

FIG. 22A is a diagram for explaining an offset value $V_{OFFSET}$ to be added to the reference signal;

FIG. 22B is a diagram showing an exemplary waveform of a differential signal provided by a comparator 222;

FIG. 22C is a diagram showing an exemplary waveform of the burst-mode data provided by a differential amplifier 223;

FIGS. 23A and 23B are diagrams each showing an exemplary waveform of incoming burst-mode data and those of clock signals $clk_1$ to $clk_8$ generated in the digital PLL circuit 1 in FIG. 20; and

FIG. 24 is a block diagram showing the detailed structure of a comparison circuit 22 shown in FIG. 20.

## DESCRIPTION OF THE PREFERRED EMBODIMENTS

(First Embodiment)

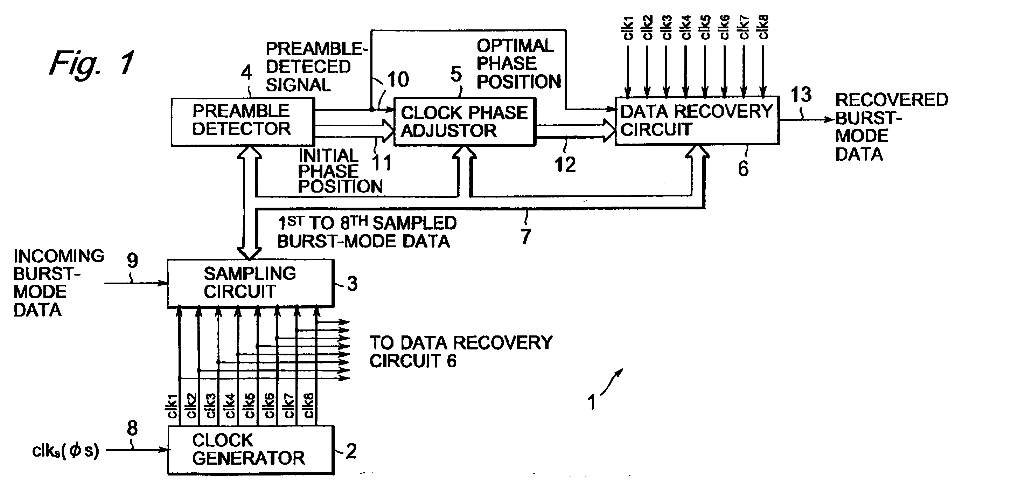

Depicted in FIG. 1 is a block diagram showing the structure of a digital PLL circuit 1 according to a first embodiment of the present invention. In FIG. 1, the digital PLL circuit 1 is provided with a clock generator 2, a sampling circuit 3, a preamble detector 4, a clock phase adjuster 5, and a data recovery circuit 6.

Through a signal line 8, the clock generator 2 is supplied with a system clock $clk_S$, a phase of which is $\phi_s$. The clock generator 2 branches the received system clock $clk_S$ into $n$ (where $n$ is a positive integer, exemplarily n=8 in FIG. 1). By using an internal delay line or a frequency divider, for example, the clock generator 2 then shifts the $n$-branched system clocks $clk_S$ in phase, preferably in a uniform manner, and thus $n$ clock signals $clk_1$ to $clk_n$ are generated. Specifically, assuming that phase positions of the clock signals $clk_1$ to $clk_n$ are $\phi_1$ to $\phi_n$, a phase differential $\Delta\phi$ satisfies $\Delta\phi = \phi_1 - \phi_2 = \phi_2 - \phi_3 ... = \phi_{n-1} - \phi_n = \phi_n - \phi_1$.

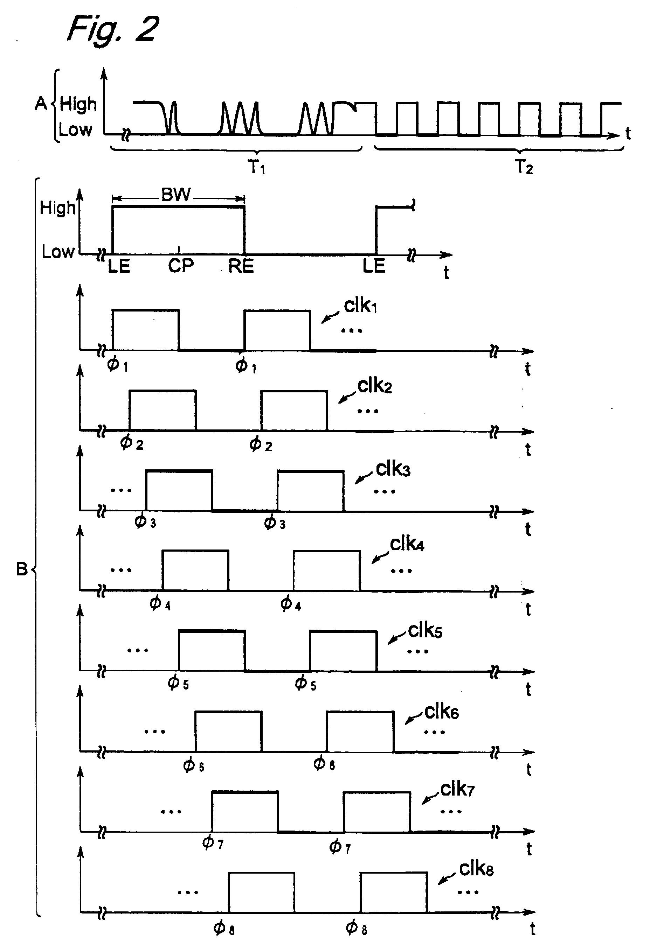

Herein, as is known from FIG. 2B, the phase positions $\phi_1$ to $\phi_n$ are respectively at an edge (in this embodiment, leading edge) of the clock signals $clk_1$ to $clk_n$. These clock signals $clk_1$ to $clk_n$ are forwarded to both the sampling circuit 3 and the data recovery circuit 6.

The digital PLL circuit 1 in FIG. 1 is supplied with intermittently-generating digital data (hereinafter, burst-mode data). As shown in FIG. 2A, a non signal period $T_1$ is observed before and after a signal period $T_2$. The non signal period $T_1$ is a time interval having no burst-mode data transmitted, and the signal period $T_2$ having the burst-mode data transmitted. Such burst-mode data is provided to the sampling circuit 3 through a signal line 9. The sampling circuit 3 is also provided with the clock signals $clk_1$ to $clk_n$ from the clock generator 2. After branching the received burst-mode data into $n$, the sampling circuit 3 samples the $n$-branched burst-mode data utilizing the clock signals $clk_1$ to $clk_n$ (see FIG. 2B), and thus $1^{st}$ to $n^{th}$ sampled burst-mode data is generated. The $1^{st}$ to $n^{th}$ sampled burst-mode data is transmitted, through a data bus 7, to the preamble detector 4, the clock phase adjuster 5, and the data recovery circuit 6, respectively.

By referring to the $1^{st}$ to $n^{th}$ sampled burst-mode data, the preamble detector 4 detects a head of the burst-mode data provided to the digital PLL circuit 1, and then sends out a signal indicating the detection (hereinafter, PREAMBLE-DETECTED signal) to a signal line 10. The PREAMBLE-DETECTED signal is received by both the clock phase adjuster 5 and the data recovery circuit 6.

As stated above, the $1^{st}$ to $n^{th}$ sampled burst-mode data has been sampled with the clock signals $clk_1$ to $clk_n$. Accordingly, any one of the phase posi-

tions $\phi_1$ to $\phi_n$ may come at an approximate-center point CP between a leading edge LE and a falling edge FE of each bit (length therebetween is hereinafter referred to as one-bit width BW). The phase $\phi_b$ (where $b$ is any number from 1 to $n$) satisfying the above positional condition is regarded as an optimal phase position $\phi_{OPT}$ for processing carried out in the data recovery circuit 6 (later described). In the example shown in FIG. 2B, $n$ is 8, and the clock signal $clk_5$ is the optimal phase position $\phi_{OPT}$. The preamble detector 4 detects a head of the $1^{st}$ to $n^{th}$ sampled burst-mode data, and then the optimal position $\phi_{OPT}$ for the detected head. Thereafter, the preamble detector 4 transmits information specifying the detected optimal phase position $\phi_{OPT}$ (hereinafter, INITIAL PHASE POSITION) to the clock phase adjuster 5 through a bus 11.

Herein, the center point CP of each bit may vary with time due to possibilities for pulse width distortion or jitter superimposed on the burst-mode data. Therefore, although the INITIAL PHASE POSITION surely indicates the optimal phase position $\phi_{OPT}$ at the head of the burst-mode data, there is no assurance therefor after a lapse in time.

In response to the PREAMBLE-DETECTED signal, the clock phase adjuster 5 starts operation, and then so adjusts that the optimal phase position $\phi_{OPT}$ follows the time-varying center point CP of each bit. Specifically, immediately after start-up, the clock phase adjuster 5 receives both INITIAL PHASE POSITION through the bus 11 and the $1^{st}$ to $n^{th}$ sampled burst-mode data through the data bus 7. The clock phase adjuster 5 then transmits the optimal phase position $\phi_{OPT}$ indicated by the received INITIAL PHASE POSITION as an OPTIMAL PHASE POSITION, without any change, to the data recovery circuit 6 through a bus 12. Thereafter, based on the transmitted OPTIMAL PHASE POSITION and the $1^{st}$ to $n^{th}$ sampled burst-mode data, the clock phase adjuster 5 finds the recently optimal phase position $\phi_{OPT}$ among $\phi_1$ to $\phi_n$, and then transmits the OPTIMAL PHASE POSITION as information indicating the recently optimal phase position $\phi_{OPT}$ to the data recovery circuit 6 through the bus 12. From then and onwards, the clock phase adjuster 5 repeats the operation of generating and transmitting the OPTIMAL PHASE POSITION indicating the recently optimal phase position $\phi_{OPT}$.

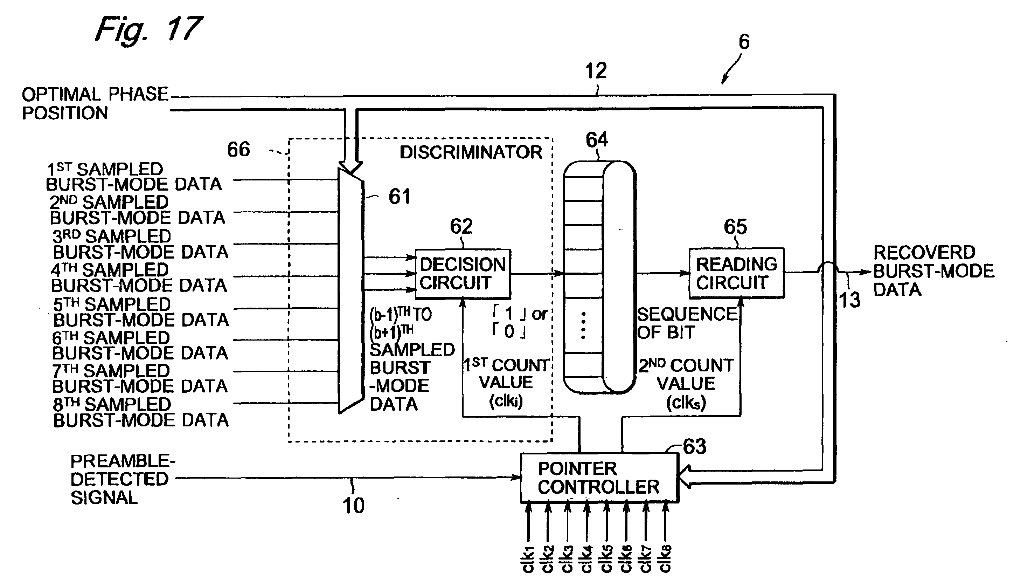

In response to the PREAMBLE-DETECTED signal, the data recovery circuit 6 starts operation, and then recovers the burst-mode data. Immediately after start-up, the data recovery circuit 6 receives both the OPTIMAL PHASE POSITION through the bus 12 and the $1^{st}$ to $n^{th}$ sampled burst-mode data through the data bus 7. Further, the data recovery circuit 6 receives the clock signals $clk_1$ to $clk_n$ generated by the clock generator 2. The data recovery circuit 6 recovers the received $1^{st}$ to $n^{th}$ sampled burst-mode data, and then writes a bit string into an internal elastic buffer 64 (see FIG. 17). This writing is done according to a clock signal $clk_b$

(where $b$ is any number from 1 to $n$) having the optimal phase position $\phi_{OPT}$ indicated by the OPTIMAL PHASE POSITION. The data recovery circuit 6 then reads the bit string written into the elastic buffer 64 for output to a signal line 13 as the recovered burst-mode data. This reading is done according to the clock signal $clk_b$ having the same phase as the system clock $clk_S$, therefore an output signal (recovered burst-mode data) from the data recovery circuit 6 synchronizes with the system clock $clk_S$. In such manner, the digital PLL circuit 1 recovers the burst-mode data synchronized with the system clock $clk_S$.

Next, the detailed structure of the digital PLL circuit 1 shown in FIG. 1 is described. In the description next below, $n$ is presumably 8. It means that the clock generator 2 generates, according to the system clock $clk_S$, clock signals $clk_1$ to $clk_8$ having different phases one another for output to the sampling circuit 3. Herein, design specifications of the digital PLL circuit 1 change the number $n$, thus the present invention should not be limited to $n = 8$ in technical scope.

The sampling circuit 3 samples the received burst-mode data utilizing the clock signals $clk_1$ to $clk_8$ having different phases one another (see FIG. 2B) and generates $1^{st}$ to $8^{th}$ sampled burst-mode data for output.

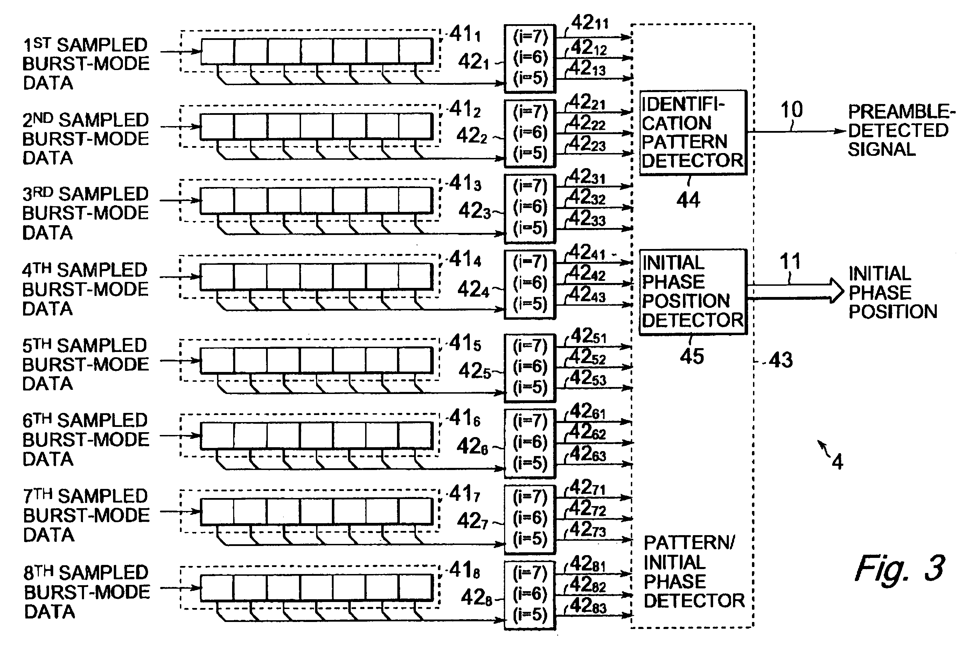

FIG. 3 shows the detailed structure of the preamble detector 4 in FIG. 1. In FIG. 3, the preamble detector 4 includes 8 shift registers $41_1$ to $41_8$, 8 decoders $42_1$ to $42_8$, and a pattern/initial phase detector 43.

The shift registers $41_1$ to $41_8$ each have the capacity for 7 bits. The shift register $41_1$ holds a series of 7 bits in the $1^{st}$ sampled burst-mode data for output to the decoder $42_1$. The shift registers $41_2$ to $41_8$ are similar in function to the shift register $41_1$, and differed only in a respect in outputting a series of 7 bits in the $2^{nd}$ to $8^{th}$ sampled burst-mode data respectively to the decoders $42_2$ to $42_8$. Therefore, the shift registers $41_2$ to $41_8$ are not described.

The decoders $42_1$ to $42_8$ each previously store an identification pattern for specifying a head of the burst-mode data provided to the digital PLL circuit 1. The decoder $42_1$ is provided with the $1^{st}$ sampled burst-mode data for 7 bits from the shift register $41_1$. If a pattern of the provided 7 bits perfectly matches to the identification pattern, the decoder $42_1$ sets an ($i=7$) signal line $42_{11}$ to "High". If a pattern of the recent 6 bits out of the 7 bits matches to the identification pattern, an ($i=6$) signal line $42_{12}$ is set to "High". Similarly, if a pattern of the recent 5 bits shows matching, an ($i=5$) signal line $42_{13}$ is set to "High". The decoders $42_2$ to $42_8$ are similar in function to the decoder $42_1$, and differed only in a respect in carrying out processing as described above based on the series of 7 bits from the shift registers $41_2$ to $41_8$. Therefore, the decoders $42_2$ to $42_8$ are not described.

The pattern/initial phase detector 43 receives decoding results obtained by the decoders $42_1$ to $42_8$ through 8 ($i=7$) signal lines $42_{11}$ to $42_{81}$, 8 ($i=6$)

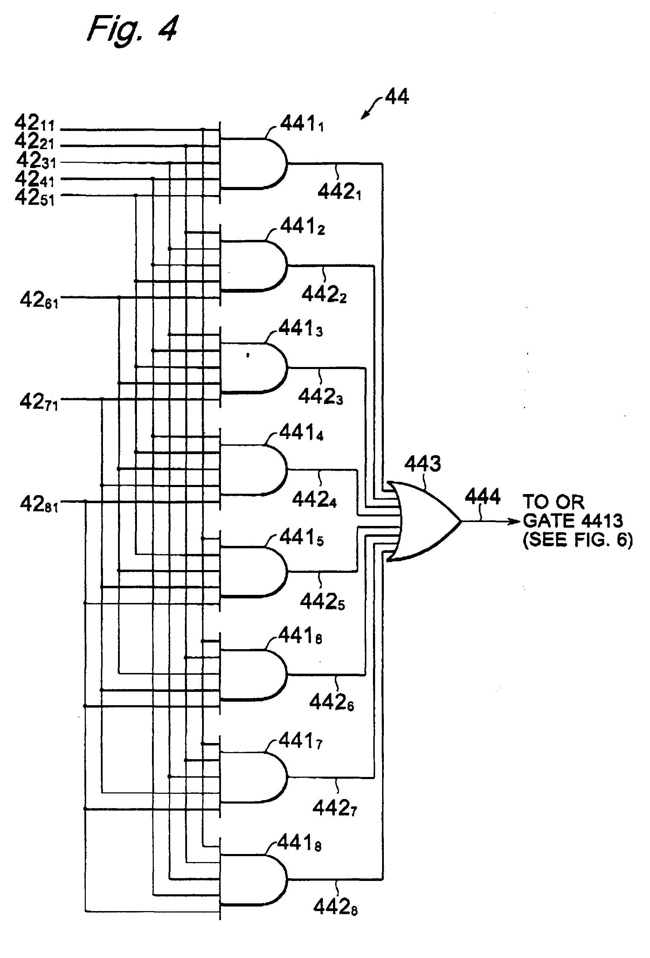

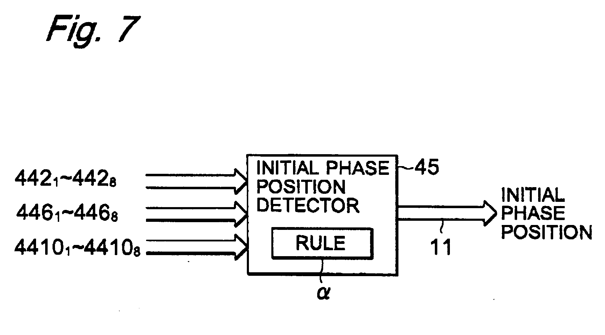

signal lines $42_{12}$ to $42_{82}$, and 8 ($i=5$) signal lines $42_{13}$ to $42_{83}$. The pattern/initial phase detector 43 includes an identification pattern detector 44, which generates, with the received decoding results, a PREAMBLE-DETECTED signal which is a signal indicating the detection of the head of the burst-mode data for output to the signal line 10. The pattern/initial phase detector 43 also includes an initial phase position detector 45, which detects, with the decoding results, the optimal phase position $\phi_{OPT}$ among the phase positions $\phi_1$ to $\phi_8$ for discrimination of the head of the burst-mode data provided to the digital PLL circuit 1. The initial phase position detector 45 outputs the detected optimal phase position $\phi_{OPT}$ to the bus 11 as an INITIAL PHASE POSITION. Next below, the identification pattern detector 44 is described in detail by referring to FIGS. 4 to 6, and the like, and then the initial phase position detector 45 is described in detail by referring to FIG. 7, and the like.

As shown in FIGS. 4 to 6, the identification pattern detector 44 includes 8 AND gates $441_1$ to $441_8$, an OR gate 443, 8 AND gates $445_1$ to $445_8$, an OR gate 447, 8 AND gates $449_1$ to $449_8$, and OR gates 4411 and 4413.

In FIG. 4, to the AND gate $441_1$, 5 ($i=7$) signal lines $42_{11}$ to $42_{51}$ are coupled. The AND gate $441_1$ performs logical operation with respect to inputs from the ($i=7$) signal lines $42_{11}$ to $42_{51}$, and outputs a result obtained thereby to the signal line $442_1$. The AND gate $441_2$ performs logical operation with respect to inputs from 5 ($i=7$) signal lines $42_{21}$ to $42_{61}$, and outputs a result obtained thereby to the signal line $442_2$. Similarly, other AND gates $441_3$ to $441_8$ perform logical operation with respect to inputs from 5 ($i=7$) signal lines 42 as shown in the drawing. Results obtained from the AND gates $441_3$ to $441_8$ are forwarded to signal lines $442_3$ to $442_8$. The OR gate 443 performs logical operation with respect to the results obtained from the AND gates $441_1$ to $441_8$ through the signal lines $442_1$ to $442_8$ for output to a signal line 444.

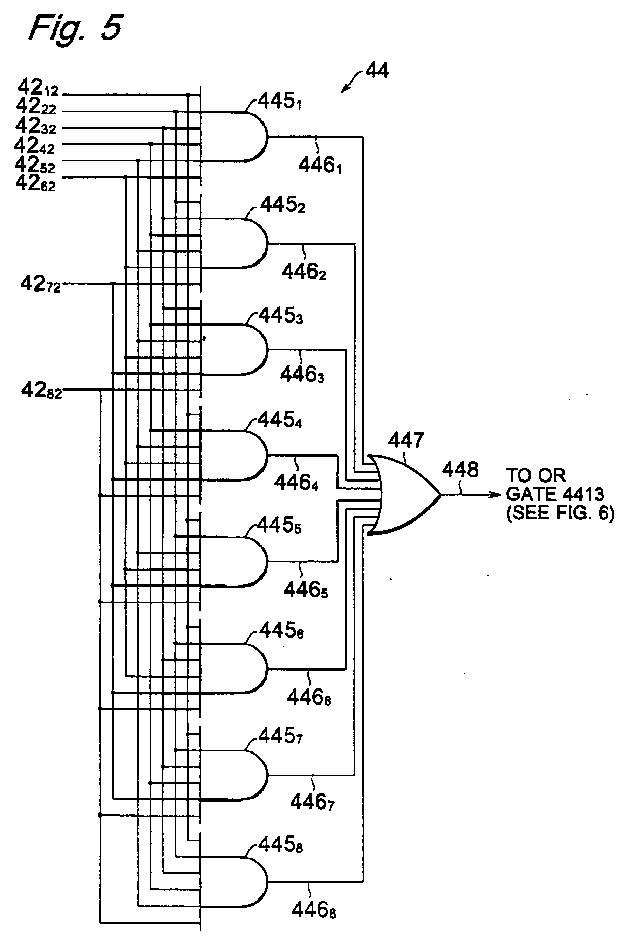

In FIG. 5, to the AND gate $445_1$, 6 ($i=6$) signal lines $42_{12}$ to $42_{62}$ are coupled. The AND gate $445_1$ performs logical operation with respect to inputs from the ($i=6$) signal lines $42_{12}$ to $42_{62}$, and outputs a result obtained thereby to a signal line 446. Similarly, other AND gates $445_2$ to $445_8$ perform logical operation with respect to inputs from 6 ($i=6$) signal lines 42 respectively coupled as shown. Results obtained thereby are forwarded to signal lines $446_2$ to $446_8$. The OR gate 447 performs logical operation with respect to the results obtained from the AND gates $446_1$ to $446_8$ through the signal lines $446_1$ to $446_8$ for output to a signal line 448.

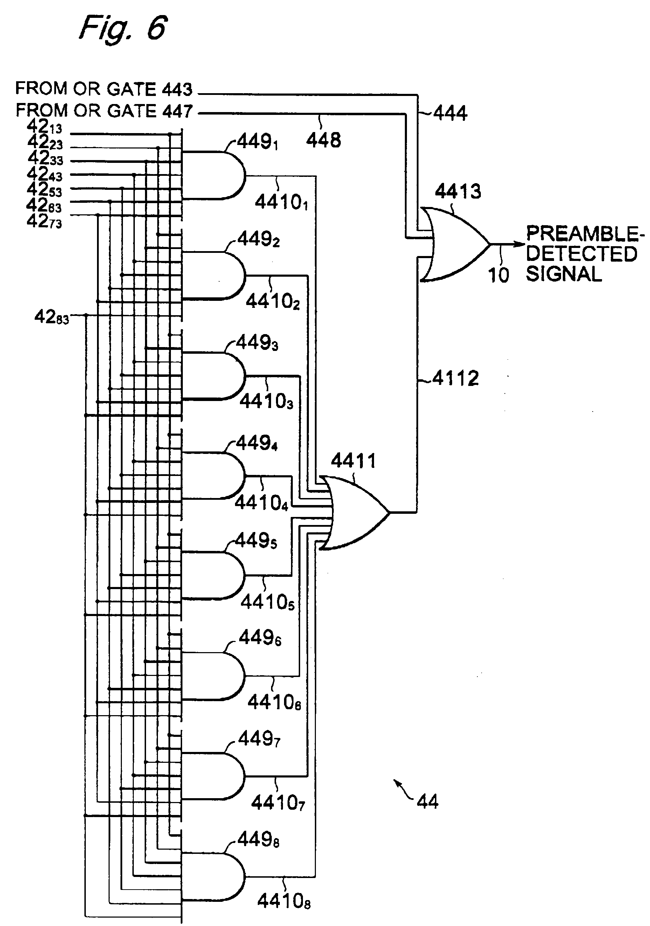

In FIG. 6, the AND gate $449_1$ performs logical operation with respect to inputs from ($i=5$) signal lines $42_{13}$ to $42_{73}$ coupled thereto, and a result obtained thereby is outputted to a signal line $4410_1$. Similarly, other AND gates $449_2$ to $449_8$ perform logical operation with respect to inputs from 7 ($i=5$) signal lines 42 respectively coupled as shown. Results obtained thereby are forwarded to signal lines $4410_2$ to $4410_8$. The OR gate 4411 performs logical operation with respect to the results obtained from the AND gates $449_1$ to $449_8$ through the signal lines $4410_1$ to $4410_8$ for output to a signal line 4412.

The OR gate 4413 is provided with the results of the OR gates 443, 447, and 4411 through the signal lines 444, 448, and 4412. The OR gate 4413 performs logical operation with respect to the results, and then outputs a result obtained thereby as a PREAMBLE-DETECTED signal.

As described in the foregoing, the burst-mode data provided to the digital PLL circuit 1 may have pulse width distortion and/or jitter. Such pulse width distortion and/or jitter may cause the preset one-bit width BW of the burst-mode data to vary with time. It is now described why the shift registers $41_1$ to $41_8$ each have the capacity for 7 bits (equivalent to a natural number $i$ in claims), and why the number of bits (equivalent to $j$ or $k$ in claims) for the decoders $42_1$ to $42_8$ to handle is 5 to 7. The description is made for a case where the one-bit width BW varies in a range of 5/8 to 11/8 compared with a preset (value).

As is known from the non signal period $T_1$ in FIG. 2A, the digital PLL circuit 1 receives randomly-generated data varied in level between "High" and "Low". Therefore, if the sampling circuit 3 samples such randomly-generated data utilizing the clock signals $clk_1$ to $clk_8$ (see FIG. 2B), a signal to be outputted therefrom as $1^{st}$ to $8^{th}$ sampled burst mode data may have a 50/50 (0.5) possibility for "High" or "Low".

The AND gate $441_1$ in FIG. 4 is now referred to. The AND gate $441_1$ is coupled to the ($i=7$) signal lines $42_{11}$ to $42_{51}$. A probability $Pe_1$ for the ($i=7$) signal lines $42_{11}$ to $42_{51}$ all being set to "High" is the fifth power of a value being the seventh power of the probability 0.5, and is expressed by the following equation (1). Herein, the value obtained by the equation (1) is also a probability for the AND gate $441_1$ outputting "High".

$$Pe_1 = (0.5^7)^5 = 2.9 * 10^{(-11)} \qquad (1)$$

Similarly, the AND gates $441_2$ to $441_8$ each output "High" with the probability obtained by the equation (1).

Next, the AND gate $445_1$ In FIG. 5 is referred to. In the case that the ($i=6$) signal lines $42_{12}$ to $42_{62}$ are all set to "High", the AND gate $445_1$ outputs "High". A probability $Pe_2$ for the AND gate $445_1$ outputting "High" is, as expressed by an equation (2) below, the sixth power of a value being the sixth power of the probability 0.5.

$$Pe_2 = (0.5^6)^6 = 1.5 * 10^{(-11)} \qquad (2)$$

Similarly, the AND gates $445_2$ to $445_8$ each output "High" with the probability obtained by the equation (2).

Next, the AND gate $449_1$ in FIG. 6 is referred to. In the case that the ($i$=5) signal lines $42_{13}$ to $42_{73}$ are all set to "High", the AND gate $449_1$ outputs "High". A probability $Pe_3$ for the AND gate $449_1$ outputting "High" Is, as expressed by an equation (3) below, the seventh power of a value being the fifth power of the probability 0.5.

$$Pe_3 = (0.5^5)^7 = 2.9 * 10^{(-11)} \qquad (3)$$

Similarly, the AND gates $449_2$ to $449_8$ each output "High" with the probability obtained by the equation (3).

As is known from the above, if the digital PLL circuit 1 receives such randomly-generated data (a signal whose value is invariable), a probability for any one of the AND gates $441_1$ to $441_8$, the AND gates $445_1$ to $445_8$, and the AND gates $449_1$ to $449_8$ outputting "High", i.e., a probability for a PREAMBLE-DETECTED signal indicating "High" is denoted by $Pe_1$, $Pe_2$, and $Pe_3$. In other words, the probabilities $Pe_1$, $Pe_2$, and $Pe_3$ each denote a probability for erroneously detecting, as the head of the burst-mode data, an incoming signal whose value is invariable. Herein, for a communication system requiring a bit error rate of $10^{(-9)}$ for transmission quality, the probabilities $Pe_1$, $Pe_2$, and $Pe_3$ are regarded as being sufficiently small. Therefore, even if any bit error is caused in the digital PLL circuit 1 due to the erroneous detection of the head, the preamble detector 4 shows no problem for practical use.

Further, to each of the AND gate $441_1$ to $441_8$, only 5 ($i$=7) signal lines 42 are coupled. It means that the AND gates $441_1$ to $441_8$ correctly output "High" and "Low" as long as a bit width of the incoming burst-mode data is 5/8 or wider compared with a preset one-bit width BW. Similarly, the AND gates $445_1$ to $445_8$ correctly output "High" and "Low" with the bit width being 6/8 or wider, and the AND gates $449_1$ to $449_8$ with the bit width being 7/8 or wider. Even if varied, the bit width of the incoming burst-mode data never becomes 5/8 or less compared with the one-bit width BW. In this case, the AND gates $441_1$ to $441_8$, $445_1$ to $445_8$, and $449_1$ to $449_8$ can correctly detect the head of the burst-mode data with high accuracy even if the bit width varies.

When every series of 7 bits held in 5 shift registers $41_b$ to $41_{(b+4)}$ (note: $41_{(b+4)}$ is $41_1$ when (b+4)=9, $41_2$ when (b+4)=10, $41_3$ when (b+4)=11, and $41_4$ when (b+4)=12) perfectly agrees in pattern with the identification pattern, the AND gate $441_b$ ($b$ = 1, 2..., 8) determines that the head of the incoming burst-mode data is detected. At this time, the OR gate 4413 outputs a PREAMBLE-DETECTED signal. As such, by using bits as many as possible (i.e., 7 bits) to see agreement/disagreement with the identification pattern, the head of the incoming burst-mode data can be detected with high accuracy.

When every pattern of 6 recent bits in a row held in 6 shift registers $41_b$ to $41_{(b+5)}$ (note: $41_{(b+5)}$ is $41_1$ when (b+5)=9, $41_2$ when (b+5)=10, $41_3$ when (b+5)=11, $41_4$ when (b+5)=12, and $41_5$ when (b+5)=13,) perfectly agrees in pattern with the identification pattern, the AND gate $445_b$ ($b$ = 1, 2..., 8) determines that the head of the incoming burst-mode data is detected.

When every pattern of 5 recent bits in a row held in 7 shift registers $41_b$ to $41_{(b+6)}$ (note: $41_{(b+6)}$ is $41_1$ when (b+6)=9, $41_2$ when (b+6)=10, $41_3$ when (b+6)=11, $41_4$ when (b+6)=12, $41_5$ when (b+6)=13, and $41_6$ when (b+6)=14,) perfectly agrees in pattern with the identification pattern, the AND gate $449_b$ ($b$ = 1, 2..., 8) determines that the head of the incoming burst-mode data is detected.

As such, by using bits as many as possible (i.e., recent 5 or 6 bits) to see agreement/disagreement with the identification pattern, the head of the incoming burst-mode data can be swiftly detected. Herein, simply using bits fewer in number leads to a higher probability for erroneously detecting the head of the burst-mode data. To prevent such problem, in this embodiment, the number (equivalent to $q$ in claims) of the decoders 42 (i.e., shift registers 41) to be coupled to the AND gates $445_b$ or $449_b$ is increased. In detail, the AND gate $445_1$ is coupled to 6 decoders $42_1$ to $42_6$ (6 shift registers $41_1$ to $41_6$) through 6 ($i$=6) signal lines $42_{12}$ to $42_{62}$. The AND gate $449_1$ is coupled to 7 decoders $42_1$ to $42_7$ (7 shift registers $41_1$ to $41_7$) through 7 ($i$=5) signal lines $42_{13}$ to $42_{73}$. Herein, an expression of "a series of $q$ decoders" in claims means $q$ decoders 42 receiving 1st to $q^{th}$ sampled burst-mode data (obtained by sampling the input burst-mode signal utilizing $q$ clock signals $clk_b$ in a row).

The pulse width distortion varies depending on a communication system into which the digital PLL circuit 1 is incorporated. Accordingly, the capacity of the shift registers $41_1$ to $41_8$ and the number of bits to be handled by the decoders $42_1$ to $42_8$ need to be optimally selected according to the specifications such as a bit rate required by the communication system. To be more specific, the present invention should not be limited in technical scope to the shift registers $41_1$ to $41_8$ being 7 bits in capacity or the number of bits to be handled by the decoders $42_1$ to $42_8$ being 5 to 7.

In order to change a probability for erroneously detecting the head, there are exemplary three manners: increase/decrease the number of stages and/or capacity of the shift registers 41; increase/decrease the number of bits for the decoders 42 to make a determination; and increase/decrease the number of signal lines 42 to be coupled to the AND gates 441, 445 and/or 449.

Next, the initial phase position detector 45 is described in detail with reference to FIG. 7. In FIG. 7, the initial phase position detector 45 is provided with the results obtained by the AND gates $441_1$ to $441_8$. $445_1$ to $445_8$, and $449_1$ to $449_8$ through the signal lines $442_1$ to

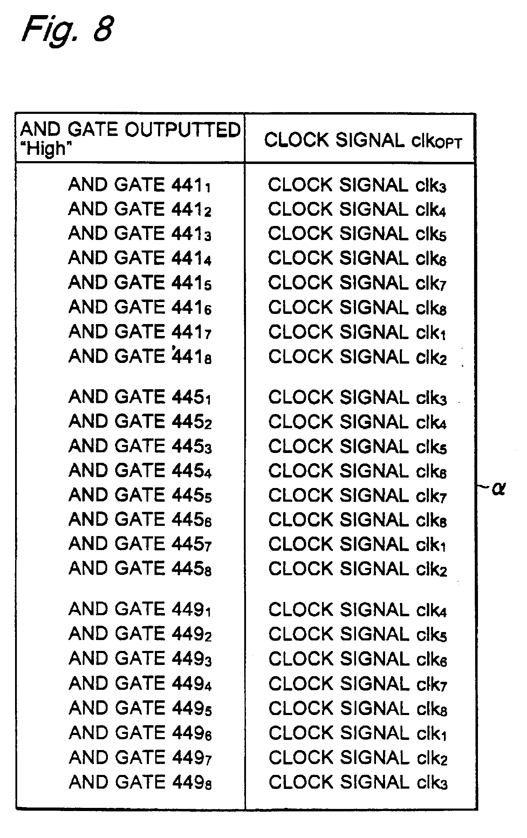

$442_8$, $446_1$ to $446_8$, and $4410_1$ to $4410_8$. On reception of the results, the initial phase position detector 45 operates in accordance with a predetermined rule $\alpha$ (see FIG. 8) so as to detect a clock signal $clk_{OPT}$ having the optimal phase position $\phi_{OPT}$. Herein, the clock signal $clk_{OPT}$ is any one of the clock signals $clk_1$ to $clk_8$. The rule $\alpha$ in FIG. 8 shows pairs of AND gate outputting the result indicating "High" and the clock signal $clk_{OPT}$ to be selected. For instance, the clock signal $clk_3$ is selected when the AND gate $441_1$ outputs "High" as shown at the top line, and the clock signal $clk_4$ is selected when the AND gate $441_2$ outputs "High" as shown in the second line. From then and onwards, the optimal clock signal $clk_{OPT}$ is selected as shown.

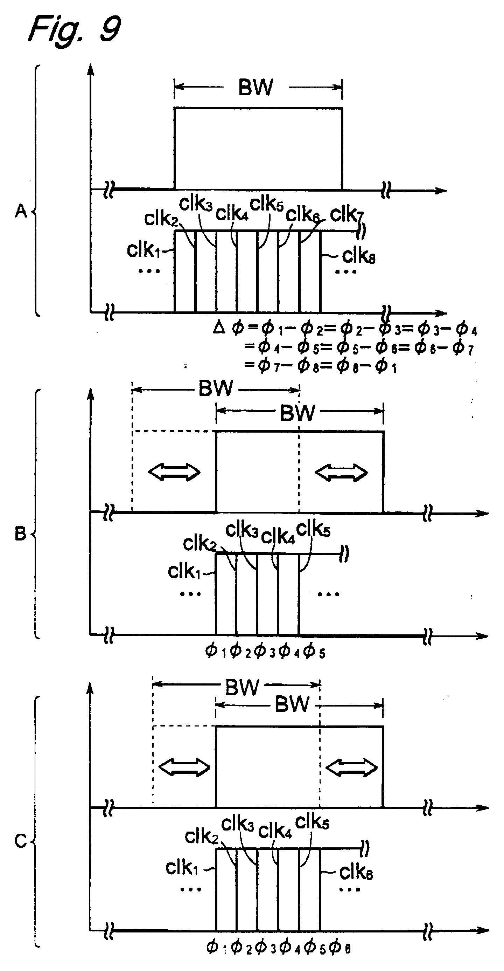

The rule $\alpha$ in FIG. 8 is set as described next below. In FIG. 9A, the one-bit width BW and the phase differential $\Delta\phi$ are both known. For example, for the AND gate $441_1$ to output "High", 5 ($i$=7) signal lines $42_{11}$ to $42_{51}$ are to be set to "High" (see FIGS. 3 and 4). In detail, as shown in FIG. 9B, even if jitter is occurred in the bits of the burst-mode data, the bits cover at least the phase positions $\phi_1$ to $\phi_5$. The clock signal $clk_3$ thus has the highest possibility for coming to the center point CP of each bit. If this is the case, as shown in FIG. 8, with the AND gate $441_1$ outputting "High", the clock signal $clk_3$ is selected. Similarly, the clock signals $clk_4$ to $clk_8$ are respectively selected with the AND gates $441_2$ to $441_6$ outputting "High", and the clock signals $clk_1$ and $clk_2$ with the AND gates $441_7$ and $441_8$.

In FIG. 8, for the AND gate $445_1$ to output "High", 6 ($i$=6) signal lines $42_{12}$ to $42_{62}$ are to be set to "High" (see FIGS. 3 and 5). In detail, as shown in FIG. 9C, the bits of the burst-mode data drift in a range covering at least the phase positions $\phi_1$ to $\phi_6$. Accordingly, the clock signal $clk_3$ has the highest possibility for coming to the center point CP of each bit. If this is the case, as shown in FIG. 8, with the AND gate $445_1$ outputting "High", the clock signal $clk_3$ is selected. Similarly, the clock signals $clk_4$ to $clk_8$ are respectively selected with the AND gates $445_2$ to $445_6$ outputting "High", and the clock signals $clk_1$ and $clk_2$ with the AND gates $445_7$ and $445_8$.

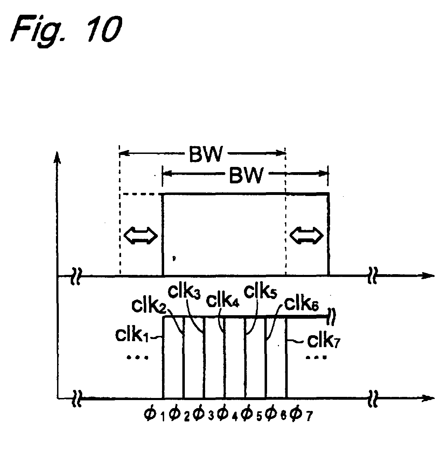

Further, in FIG. 8, for the AND gate $449_1$ to output "High", 7 ($i$=5) signal lines $42_{13}$ to $42_{73}$ are to be set to "High" (see FIGS. 3 and 6). In detail, as shown in FIG. 10, the bits of the burst-mode data drift in a range covering at least the phase positions $\phi_1$ to $\phi_7$. Accordingly, the clock signal $clk_4$ has the highest possibility for coming to the center point CP of each bit. If this is the case, as shown in FIG. 8, with the AND gate $449_1$ outputting "High", the clock signal $clk_4$ is selected. Similarly, the clock signals $clk_5$ to $clk_8$ are respectively selected with the AND gates $449_2$ to $449_5$ outputting "High", and the clock signals $clk_1$ to $clk_3$ with the AND gates $449_6$ to $449_8$.

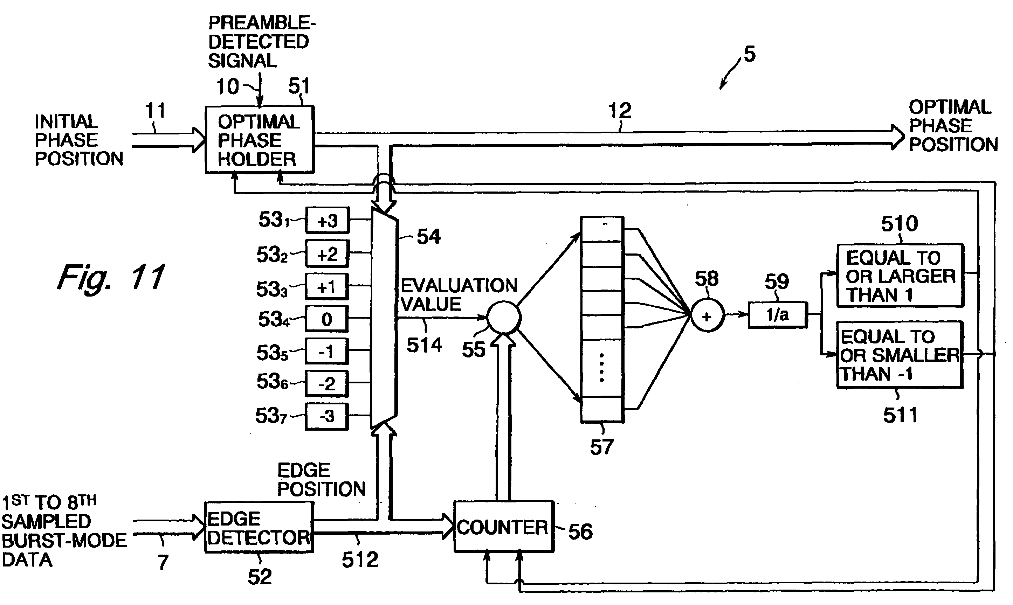

According to such rule $\alpha$, the initial phase position detector 45 specifies the clock signal $clk_{OPT}$ being in closest vicinity to the center point CP of each bit. The initial phase position detector 45 generates a value indicating the specified clock signal $clk_{OPT}$ for transmission to the clock phase adjuster 5 (see FIG. 11) as an INITIAL PHASE POSITION.

Next, the clock phase adjuster 5 is described in detail with reference to FIG. 11. In FIG. 11, the clock phase adjuster 5 includes an optimal phase holder 51, an edge detector 52, 7 registers $53_1$ to $53_7$, a selector 54, an address controller 55, a counter 56, a register 57, an adder 58, a divider 59, an up-pulse generation part 510, and a down-pulse generation part 511.

The optimal phase holder 51 starts operation in response to the PREAMBLE-DETECTED signal. The optimal phase holder 51 then holds the received value (i.e., the clock signal $clk_{OPT}$) indicated as the INITIAL PHASE POSITION. The optimal phase holder 51 then holds the clock signal $clk_{OPT}$ recently on hold as an initial value. Then, the optimal phase holder 51 transmits information indicating the clock signal $clk_{OPT}$ recently on hold as an OPTIMAL PHASE POSITION to the selector 54 and the data recovery circuit 6 (later described) through the bus 12.

The phase position $\phi_{OPT}$ (i.e., the clock signal $clk_{OPT}$) specified by the INITIAL PHASE POSITION is obtained from the head of the incoming burst-mode data. Therefore, although the phase position $\phi_{OPT}$ is initially valid, there is no assurance therefor after a lapse in time. This is because pulse width distortion and/or jitter causes the center point CP of each bit to vary with time. To get around such problem, the clock phase adjuster 5 have the optimal phase position $\phi_{OPT}$ come to the center point CP of each bit.

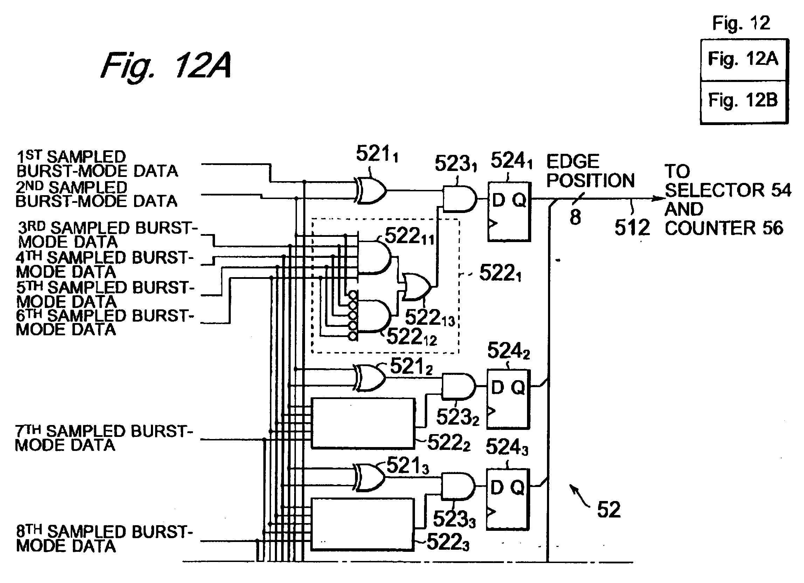

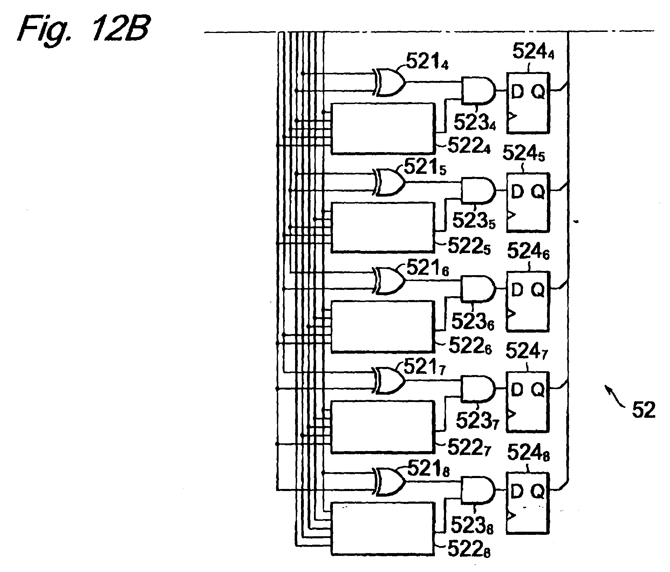

The edge detector 52 detects, according to the $1^{st}$ to $8^{th}$ sampled burst-mode data transmitted through the data bus 7, an edge position $\phi_{EDGE}$ at the front edge LE (leading edge) or the rear edge RE (falling edge) of each bit. The detected edge position $\phi_{EDGE}$ is transmitted to the selector 54 and the counter 56 as an EDGE POSITION through a bus 512. To be more specific, the edge detector 52 has such structure as shown In FIG. 12. In FIG. 12, the edge detector 52 includes 8 exclusive OR circuits $521_1$ to $521_8$, 8 decision circuits $522_1$ to $522_8$, 8 AND gates $523_1$ to $523_8$, and D-type flip-flop amplifiers $524_1$ to $524_8$.

An exclusive OR circuits $521_b$ (where $b$ = 1, 2..., 8) is provided with $b^{th}$ to $(b+1)^{th}$ sampled burst-mode data obtained by sampling utilizing two clock signals $clk_b$ and $clk_{(b+1)}$ adjoining in phase to each other (note that, when $b$ = 8, $clk_{(b+1)}$ is $clk_1$). For example, the exclusive OR circuit $521_1$ is provided with the $1^{st}$ and $2^{nd}$ sampled burst-mode data, and the exclusive OR circuit $521_8$ with the $8^{th}$ and $1^{st}$ sampled burst-mode data.

The exclusive OR circuit $521_b$ calculates an exclusive OR of the received $b^{th}$ and the $(b+1)^{th}$ burst-mode data so as to detect a transition point in level from "High" to "Low" or from "Low" to "High". When detected any transition point, the exclusive OR circuits $521_b$ outputs "High", otherwise outputs "Low".

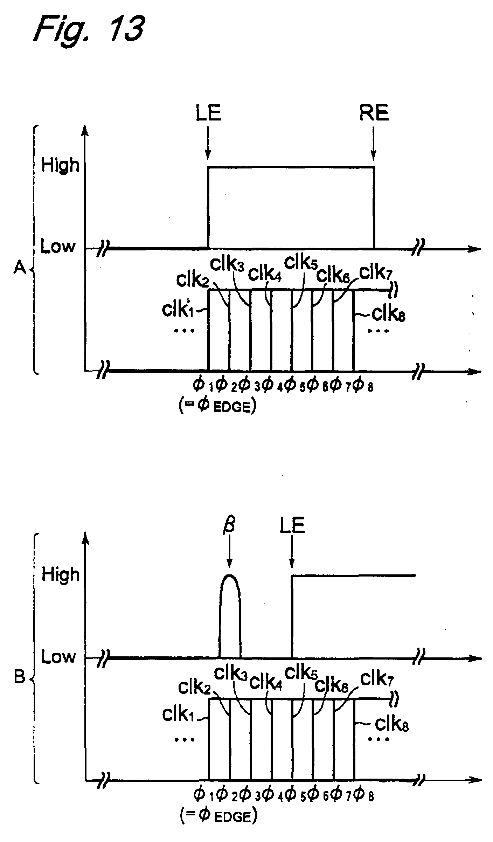

Herein, the exclusive OR circuit $521_b$ detects two types of transition points. The first transition point is the one resulted from the leading edge LE and the falling edge FE, and indicates an edge position necessary for the clock phase adjuster 5. In the example shown in FIG. 13A. the leading edge LE of each bit is located between the phase positions $\phi_1$ and $\phi_2$. In this case, the exclusive OR circuit $521_1$ outputs "High" but not others.

The second transition point is the one resulted from any noise superimposed on the incoming burst-mode data. The exclusive OR circuit $521_b$ detects even such unwanted transition point as the second. As shown in FIG. 13B, in the case that noise (see arrow β) is instantaneously generated, the exclusive OR circuits $521_1$ and $521_2$ both output "High". Since the clock phase adjuster 5 only needs positional information about the leading edge LE and falling edge FE for each bit, there is no need to detect the second transition point resulted from noise.

A decision circuit $522_b$ (where $b = 1, 2..., 8$) is provided with $(b+1)^{th}$ to $(b+5)^{th}$ sampled burst-mode data obtained by sampling utilizing 5 clock signals $clk_{(b+1)}$ to $clk_{(b+5)}$ whose phase positions are in a row. For example, the decision circuit $522_1$ is provided with the $2^{nd}$ to $6^{th}$ sampled burst-mode data, and the decision circuit $522_8$ with the $1^{st}$ to $5^{th}$ sampled burst-mode data.

The decision circuit $522_b$ includes AND gates $522_{b1}$ and $522_{b2}$, and an OR gate $522_{b3}$. For convenience, FIGS. 12A and 12B show the structure of the decision circuit $522_1$ but not that of other decision circuits $522_2$ to $522_8$ as being identical. Herein, the structure of the decision circuit $522_1$ is representatively described. The AND gate $522_{11}$ receives the $2^{nd}$ to $5^{th}$ sampled burst-mode data without any change. When the incoming burst-mode data has such waveform as shown in FIG. 13A, the sampled burst-mode data all indicate "High". Therefore, the AND gate $522_{11}$ outputs "High". In detail, the AND gate $522_{11}$ detects whether or not the sampled burst-mode data keeps indicating "High" at the phase positions $\phi_2$ to $\phi_5$. When the incoming burst-mode data has such waveform as in FIG. 13B, on the other hand, any one of the sampled burst-mode data indicates "Low", and thus the AND gate $522_{11}$ outputs "Low". Herein, the AND gate $522_{12}$ is provided with the inverted $2^{nd}$ to $5^{th}$ sampled burst-mode data, therefore outputs "High". In detail, the AND gate $522_{12}$ detects whether or not the sampled burst-mode data keeps indicating "Low" at the phase positions $\phi_2$ to $\phi_5$. Further, outputs from the AND gates $522_{11}$ and $522_{12}$ are forwarded to the OR gate $522_{13}$. If either of these outputs indicates "High", the OR gate $522_{13}$ outputs "High".

Other decision circuit $522_2$ to $522_8$ operate in a similar manner to the decision circuit $522_1$ with different sampled burst-mode data, and detects whether or not the sampled burst-mode data keeps indicating "High" or "Low" at the phase positions $\phi_b$ to $\phi_{(b+4)}$.

An AND gate $523_b$ (where $b = 1, 2..., 8$) calculates a logical multiplication of an output from the above-described exclusive OR circuit $521_b$ and an output from the decision circuit $522_b$. In detail, when the exclusive OR circuit $521_b$ detects the transition point from "High" to "Low" or from "Low" to "High" and when the decision circuit $522_b$ detects continuity of "High" or "Low", the AND gate $523_b$ outputs "High". By taking the case in FIG. 13A as an example, only the AND gate $523_1$ outputs "High", and thus the first transition point resulted from the leading edge LE is detected between the phase positions $\phi_1$ and $\phi_2$. By taking the case in FIG. 13B as an example, even if the transition point is observed between the phase positions $\phi_1$ and $\phi_2$, the AND gate $523_b$ does not output "High" without the decision circuit $522_b$ detecting continuity of "High". That is, the AND gate $523_1$ determines that the transition point between the phase positions $\phi_1$ and $\phi_2$ is not resulted from the leading edge LE or the falling edge FE but the noise (see arrow β).

As is described in the foregoing, the combination of the AND gate $521_b$, the decision circuit $522_b$, and the AND gate $523_b$ makes it possible to detect only the first transition point resulted from the leading edge LE or the falling edge FE.

A D-type flip-flop amplifier $524_b$ ($b = 1, 2..., 8$) holds the output from the AND gate $523_b$ coupled thereto. The values held by the flip-flop amplifiers $524_1$ to $524_8$ are transmitted with the same timing and are superimposed on the bus 512. In this manner, an EDGE POSITION having an 8-bit width is generated. The EDGE POSITION specifies the edge position $\phi_{EDGE}$ as any one of the phase positions $\phi_1$ to $\phi_8$. In the case in FIG. 13A, only the flip-flop amplifier $524_1$ outputs "High" and others "Low". Accordingly, the EDGE POSITION indicates (Hi, Lo, Lo, Lo, Lo, Lo, Lo, Lo). If this is the case, the edge position $\phi_{EDGE}$ is between the phase positions $\phi_1$ and $\phi_2$.

As described above, the edge detector 52 responds only to the level change resulted from the leading edge LE or the falling edge FE. Further, the edge detector 52 transmits, to the selector 54 and the counter 56 through the bus 512, the EDGE POSITION indicating the detected edge position $\phi_{EDGE}$ with the phase position $\phi_b$.

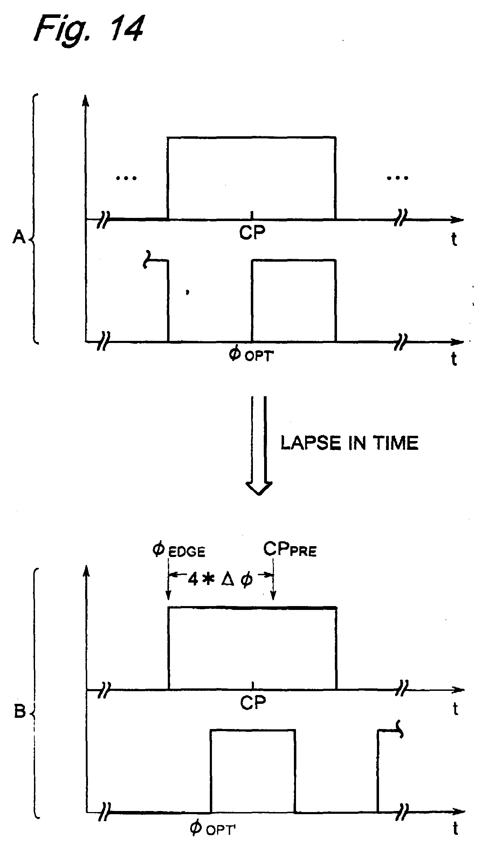

Refer to FIG. 11 again. The selector 54 receives an EDGE POSITION and an OPTIMAL PHASE POSITION. Hereinafter, for clarity, the optimal position $\phi_{OPT}$ indicated by the OPTIMAL PHASE POSITION received by the selector 54, i.e., the OPTIMAL PHASE POSITION recently held by the optimal phase holder 51 is referred to as a previous optimal phase position $\phi_{OPT}'$. With reference to FIGS. 14A and 14B, it is now described the relationship between the edge position $\phi_{EDGE}$ indicated by the EDGE POSITION and the previous optimal phase position $\phi_{OPT}'$. As shown in FIG. 14A, the previous phase position $\phi_{OPT}'$ is the phase position judged as being in the closest vicinity to the center point CP of each bit of the incoming burst-mode data in the last processing. However, due to pulse-width distortion and/or jitter, there is no assurance for the previous phase position $\phi_{OPT}'$ remaining in the closest vicinity thereto after a lapse in time. Without being updated, as shown In FIG. 14B, the previous phase position $\phi_{OPT}'$ may move off from the center point CP of each bit with a lapse in time.

The one-bit width BW is variable and known. Accordingly, with conditionally no pulse width distortion and/or jitter, a time $d$ from the edge position $\phi_{EDGE}$ to the center point CP is also known. Further, when a phase differential $\Delta\phi$ between any two adjoining phase position is the same, the time $d$ is proportional to the phase differential $\Delta\phi$. With the time $d$ supposedly being $4*\Delta\phi$ (i.e., 4/8 phase), the edge position $\phi_{EDGE}$ plus $4*\Delta\phi$ denotes the position in the closest vicinity to the original center point CP. In other words, $\phi$ EDGE + $4*\Delta\phi$ denotes the recent center point CP (hereinafter, recent center point $CP_{PRE}$) with the highest certainty.

The selector 54 performs the above-described operation so as to calculate the recent center point $CP_{PRE}$. The edge position $\phi_{EDGE}$ and the recent center point $CP_{PRE}$ are each indicated by any one of the phase positions $\phi_1$ to $\phi_8$.

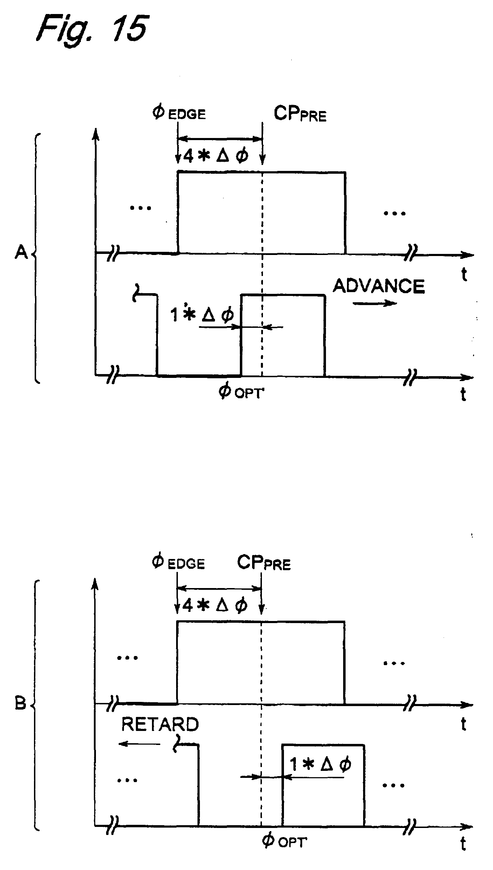

Then, the selector 54 compares the recent center point $CP_{PRE}$ with the previous optimal position $\phi_{OPT}'$. If the comparison shows coincidence therebetween, the selector 54 extracts a weighting value "0" stored in the register $53_4$ for output as an evaluation value "0". If the recent center point $CP_{PRE}$ is advanced by 1/8 phase with reference to the previous optimal position $\phi_{OPT}'$, as shown in FIG. 15A, the selector 54 extracts a weighting value "-1" stored in the register $53_3$ for output as an evaluation value "-1". If the recent center point $CP_{PRE}$ is retarded by 1/8 phase, as shown in FIG. 15B, the selector 54 extracts a weighting value "+1" stored in the register $53_5$ for output as an evaluation value "+1". Similarly, when the recent center point $CP_{PRE}$ is advanced by 2/8 or 3/8 phase with reference to the previous optimal position $\phi_{OPT}'$, an evaluation value "-2" or "-3" is extracted. If the recent center point $CP_{PRE}$ is retarded by 2/8 or 3/8 phase, an evaluation value "+2" or "+3" is extracted. As stated above, the selector 54 finds the recent center point $CP_{PRE}$ every time the EDGE POSITION is provided, and then obtains any one of the evaluation values "-3" to "+3". As is obvious from the above, the evaluation value indicates how much the recent center point $CP_{PRE}$ is shifted from the previous phase position $\phi_{OPT}'$, and is transmitted from the selector 54 to the address controller 55.

The EDGE POSITION is transmitted not only to the selector 54 but to the counter 56 through the bus 512. The counter 56 increments a count value every time the EDGE POSITION is provided (i.e., every time the edge position $\phi_{EDGE}$ is detected) for transmission to the address controller 55. To be more specific, the counter 56 counts address positions 1" to "x" for the address controller 55 to write the evaluation value.

The address controller 55 receives the evaluation value and the count value. To a stage subsequent thereto, the register 57 which can hold the evaluation value for x words (equivalent to x in claims) is coupled. To a region in which a unit word is stored, unique addresses "1" to "x" are each assigned. The address controller 55 writes the received evaluation value to an address of the register 57 indicated by the received count value.

In this manner, the evaluation value is sequentially written into the register 57 every time the edge position $\phi_{EDGE}$ of each bit is detected. With the evaluation value accumulated for x words, the adder 57 receives the evaluation value for x words from the register 57 so as to calculates a total thereof. Thereafter, the divider 59 divides the total by x. The average is thus taken for x-piece of evaluation values. The calculated average is forwarded to the up-pulse generation part 510 and the down-pulse generation part 511. The up-pulse generation part 510 outputs an up-pulse to the optimal phase holder 51 only when the average is equal to or larger than "+1". The down-pulse generation part 511 outputs a down-pulse to the optimal phase holder 51 only when the average is equal to or smaller than "-1".

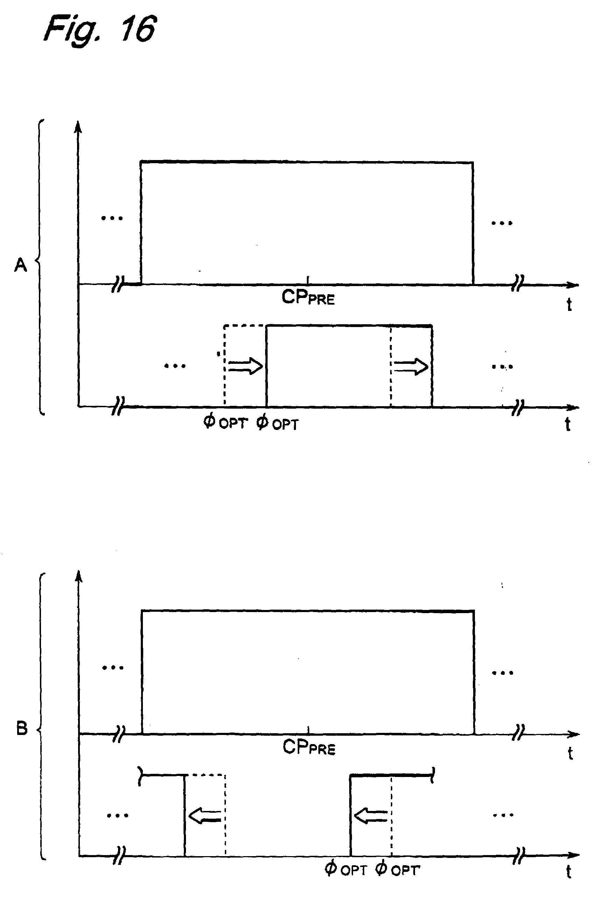

The up-pulse and down-pulse each indicate that the center points $CP_{PRE}$ detected for x times are averagely advanced or retarded with respect to the previous optimal phase position $\phi_{OPT}'$. Based on the received up-pulse or down-pulse, the optimal phase holder 51 generates a value indicating the recent optimal position $\phi_{OPT}$, and holds the value as a new OPTIMAL PHASE POSITION. To be more specific, with the up-pulse provided, as shown in FIG. 16B, the position retarded from the previous optimal position $\phi_{OPT}'$ by one phase differential $\Delta\phi$ is selected as the recent optimal phase position $\phi_{OPT}$. With the down-pulse provided, on the other hand, the recent optimal phase position $\phi_{OPT}$ is, as shown in FIG. 16A, advanced from the previous optimal phase position $\phi_{OPT}'$ by one phase differential $\Delta\phi$. Such new OPTIMAL PHASE POSITION is forwarded to the data recovery circuit 6 through the bus 12.

Either the up-pulse or the down-pulse is outputted also to the counter 56. The counter 56 regards the received pulse as a reset signal, and restarts the counting operation. In this manner, the register 57 is constantly stored with the average of the x-piece evaluation values, and thus the recent optimal phase position $\phi_{OPT}$ is updated whenever necessary. In such manner, the optimal phase holder 51 newly detects the optimal phase position $\phi_{OPT}$ on a predetermined time basis (every time the edge position $\phi_{EDGE}$ is detected for x times). Therefore, the optimal phase position $\phi_{OPT}$ always comes to the center point CP of each bit of the burst-mode data provided to the digital PLL circuit 1.

Next, the data recovery circuit 6 is described in detail with reference to FIG. 17. In FIG. 17, the data recovery circuit 6 includes a selector 61, a decision circuit 62, a pointer controller 63, an elastic buffer 64, and a reading circuit 65. Herein, the selector 61 and the decision circuit 62 structure a discriminator 66.

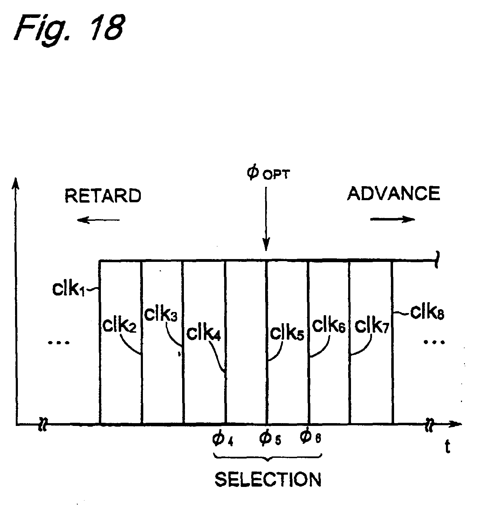

The selector 61 is provided with the 1st to 8th sampled burst-mode data through the data bus 7 (see FIG. 1). The selector 61 also receives, through the bus 12, the OPTIMAL PHASE POSITION indicating the optimal phase position $\phi_{OPT}$, which is $\phi_b$ (where $b$ is a natural number from 1 to 8). The selector 61 selects a phase position $\phi_{(b-1)}$ before the optimal phase position $\phi_{OPT}$ (that is, $\phi_b$) and a phase position $\phi_{(b+1)}$ thereafter every time the OPTIMAL PHASE POSITION is received. In the case that the optimal phase position $\phi_{OPT}$ is $\phi_5$, as shown in FIG. 18, the phase positions $\phi_4$ to $\phi_6$ are selected. Thereafter, the selector 61 selects clock signals $clk_{(b-1)}$ to $clk_{(b+1)}$ whose phase positions are $\phi_{(b-1)}$ to $\phi_{(b+1)}$. Then, the selector 61 selects only (b-1)th to (b+1)th sampled burst-mode data obtained by sampling utilizing the clock signals $clk_{(b-1)}$ to $clk_{(b+1)}$ for output to the decision circuit 62.

The pointer controller 63 receives the PREAMBLE-DETECTED signal, the OPTIMAL PHASE POSITION, and the clock signals $clk_1$ to $clk_8$ having different phases one another. In response to the PREAMBLE-DETECTED signal, the pointer controller 63 starts operation. After start-up, the pointer controller 63 selects, out of the clock signals $clk_1$ to $clk_8$, the clock signal $clk_b$ having the optimal phase position $\phi_{OPT}$ (that is, $\phi_b$) indicated by the OPTIMAL PHASE POSITION. The pointer controller 63 synchronizes with the clock signal $clk_b$ (phase position $\phi_b$), and then increments the first count value for output to the decision circuit 62. The first count value indicates a writing address in the elastic buffer 64 (later described).

According to the majority of the received (b-1)th to (b+1)th sampled burst-mode data, the decision circuit 62 determines which bit (level "High" or "Low") is to be written into the subsequent elastic buffer 64. For example, when the (b-1)th, the bth, and the (b+1)th sampled burst-mode data respectively indicate High", "Low", and "High", "High" is more in number than "Low". Accordingly, the level "High" is discriminated as a to-be-written bit (burst-mode data). Thereafter, the decision circuit 62 writes the discriminated bit (burst-mode data) to the elastic buffer 64 in an address indicated by the first count value provided from the pointer controller 63. Further, since the first count value is synchronized with the clock signal $clk_b$, writing into the elastic buffer 64 is carried out in synchronization with the clock signal $clk_b$.

Note that, the decision circuit 62 is not structurally essential for the digital PLL circuit 1. However, the decision circuit 62 is preferably incorporated thereinto as it improves the resistance to noise possibly occurring in the burst-mode data provided to the digital PLL circuit 1. Next below, it is described how the noise resistance is improved. Fundamentally, the discriminator 66 writes only the bth sampled burst-mode data selected by the selector 61 into the elastic buffer 64. In this manner, the object (discriminate between the non signal period and burst-mode data so as to correctly recover only the burst-mode data) of the digital PLL circuit 1 can be achieved.

Herein, the randomly-occurring noise may superimpose on the optimal phase position $\phi_{OPT}$ ($\phi_b$) of the burst-mode data. If this is the case, the bth sampled burst-mode data obtained by sampling utilizing the clock signal $clk_b$ (phase position $\phi_b$) may have a bit error.

Some noise may be instantaneously superimposed on the burst-mode data. Such noise, however, may be superimposed on the phase position $\phi_b$ but not on the phase positions $\phi_{(b-1)}$ and $\phi_{(b+1)}$ in the vicinity thereof. It means that the (b-1)th and (b+1)th sampled burst-mode data barely has a bit error.

As stated above, the decision circuit 62 takes majority for the (b-1)th to (b+1)th sampled burst-mode data selected by the selector 61. Therefore, with the decision circuit 62 incorporated, the bit to be written into the elastic buffer 64 is decreased in possibility for any noise-caused error. As a result, the resistance to noise possibly occurring in the burst-mode data can be improved.

In the above, the selector 61 is set to select the (b-1)th to (b+1)th sampled burst-mode data, i.e., three sampled burst-mode data. However, the number is not restrictive and is fine as long as being plural (equivalent top $p$ in claims).

Refer to FIG. 17 again. After start-up, the pointer controller 63 outputs not only the first count value but the second. It is now described how the pointer controller 63 operates to output the second count value. Any one of the clock signals $clk_1$ to $clk_8$ provided to the pointer controller 63 is equal to the system clock $clk_S$ in phase position $\phi_S$. The pointer controller 63 synchronizes with the system clock $clk_S$ (phase position $\phi_S$), and then increments the second count value for output to the reading circuit 65. The second count value indicates a reading address from the elastic buffer 64 (later described).

The reading circuit 65 reads the burst-mode data written into the elastic buffer 64 from the address indicated by the second count value provided by the pointer controller 63. Since the second count value is synchronized with the system clock $clk_S$, reading from the elastic buffer 64 is carried out also in synchronization with the system clock $clk_S$. Note that, an initial value of the writing address of the decision circuit 62 and that of the reading address of the reading circuit 65 are previously so set as to be logically furthermost to each other in the address region of the elastic buffer 64. The reading circuit 65 outputs the read bit string to the signal line 13 as the recovered burst-mode data.

(Second Embodiment)

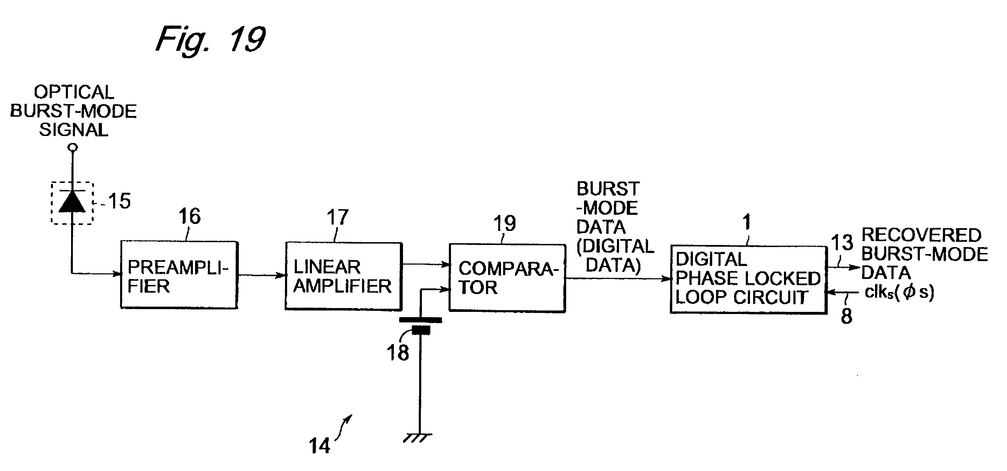

It is now described an optical receiving circuit 14 according to a second embodiment of the present invention with reference to FIG. 19. In FIG. 19, the optical receiving circuit 14 includes an optical/electrical conversion device 15, a preamplifier 16, a linear amplifying circuit 17, a reference signal generator 18, a comparator 19, and the digital PLL circuit 1.

The optical/electrical conversion device 15 is typically implemented as a photodiode, and converts an intermittently-generating optical signal (hereinafter, optical burst-mode signal) into an electrical signal. The preamplifier 16 amplifies the electrical signal converted by the optical/electrical device 15 for output to the linear amplifier 17 in a stage subsequent thereto. The linear amplifying circuit 17, the reference signal generator 18, and the comparator 19 structure a so-called AGC (Automatic gain Control) amplifier, and constantly amplifies an amplitude value of the electrical signal for output. To be more specific, the linear amplifying circuit 17 linearly amplifies the electrical signal from the preamplifier 16 for output to the comparator 19. The reference signal generator 18 generates a reference signal for output to the comparator 19.

The comparator 19 compares the electrical signal from the linear amplifying circuit 17 with the reference signal from the reference signal generator 18. When the electrical signal is larger in value than the reference signal, the comparator 19 outputs a signal indicating "High", otherwise a signal indicating "Low". In this manner, the burst-mode data described in the first embodiment is transmitted from the comparator 19 to the digital PLL circuit 1.

As is structurally and functionally similar to the one in the first embodiment, the digital PLL circuit 1 herein is simply described. The digital PLL circuit 1 correctly discriminates between the non signal period $T_1$ and the signal period $T_2$ having the burst-mode data transmitted, and according to the provided burst-mode data, recovers the clock signal $clk_b$ (where $b$ is a natural number from 1 to $n$) having the optimally-controlled phase position $\phi_{OPT}$. The discriminator 66 (see FIG. 17) provided in the digital PLL circuit 1 synchronizes with the clock signal $clk_b$, and then operates to discriminate the burst-mode data. The discriminated burst-mode data is written into the elastic buffer 64. The reading circuit 65 synchronizes with the system clock $clk_S$, and operates to read the data from the elastic buffer 64. The read data is outputted to the signal line 13 as the recovered burst-mode data.

With such optical receiving circuit 14, the optical burst-mode signal is recovered as data synchronized with the system clock $clk_S$.

As stated above, the optical receiving circuit 14 is provided with the digital PLL circuit 1 being capable of detecting the head of the burst-mode data. Herein, in the digital PLL circuit 1, the preamble detector 4 is peculiarly provided in a stage preceding to the clock phase adjuster 5 and the data recovery circuit 6. With such structure, the comparator 19 has no more need to have the hysteresis function. To be more specific, the digital PLL circuit 1 receives a signal invariable in value (random data) generated in the non signal period $T_1$, and resultantly the preamble detector 4 erroneously deals with the random data as burst-mode data. However, the possibility for the preamble detector 4 to erroneously detect the identification pattern from the random data is sufficiently low as described in the foregoing with the equations (1) to (3). Accordingly, the subsequent clock phase adjuster 5 and the data recovery circuit 6 can operate while responding only to the burst-mode data for recovery. In this manner, the hysteresis function has no more need to forcefully set the output signal from the comparator 19 to "0", whereby the comparator 19 is freed from the hysteresis function. Further, since the clock phase adjuster 5 and the data recovery circuit 6 respond only to the burst-mode data, the recovery processing of the burst-mode data can be correctly carried out.

(Third Embodiment)

In the second and third conventional examples in the "Prior Art" section, the hysteresis function is provided for the purpose of recovering the clock having the correct phase position even in the vicinity of the head of the burst-mode data. A hysteresis controller is incorporated into the comparator in the last stage of the AGC amplifier, and shifts the reference signal in value with respect to the incoming signal depending on the output from the comparator. With the hysteresis controller, the output signal from the AGC amplifier is fixedly set to "0" in the non signal period.

In the second and third conventional examples, however, the hysteresis controller is set valid even in the signal period, and thus the reference signal shifts in value according to the burst-mode data. As a result, the SN ratio (Signal to Noise Ratio) is lowered, in other words, a reception level for high-quality data communication with a bit error rate suppressed shows deterioration.

The hysteresis controller may cause no problem if the reference signal can be kept at the same shifting level to both output signals indicating "0" and "1". If it is impossible due to variation of devices realizing the hysteresis controller, the comparator problematically enhances the pulse width distortion before outputting a signal.

In a third embodiment next below, it is described an optical receiving circuit which can prevent the SN ratio from being lowered by controlling the hysteresis controller based on presence/absence of the optical burst-mode signal.

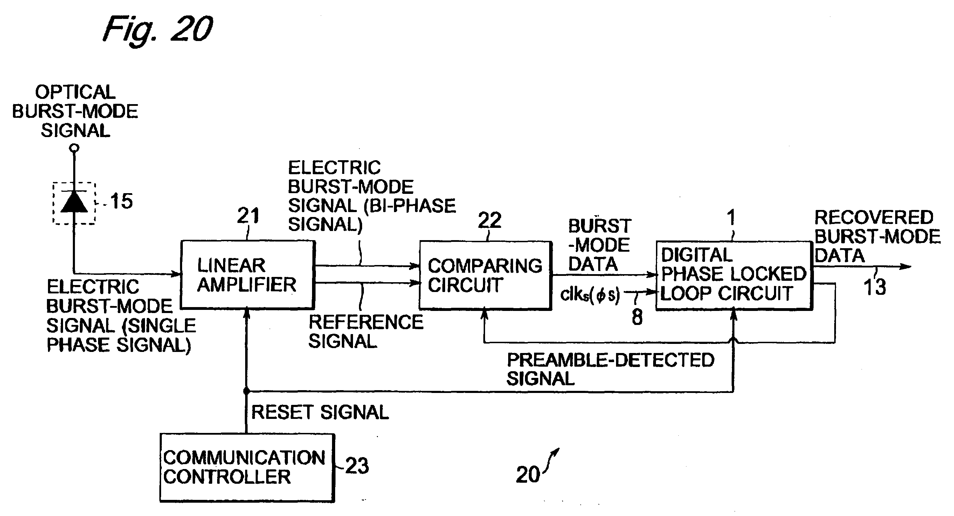

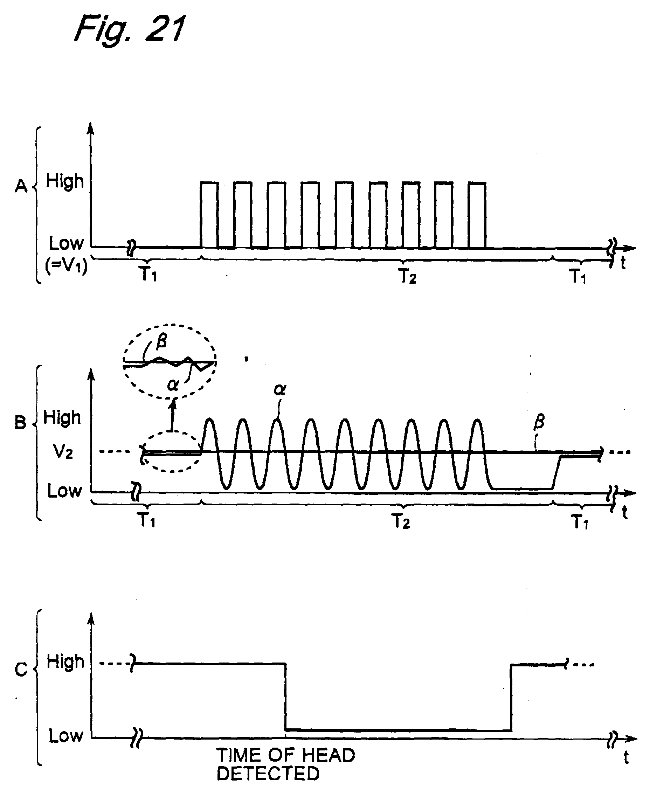

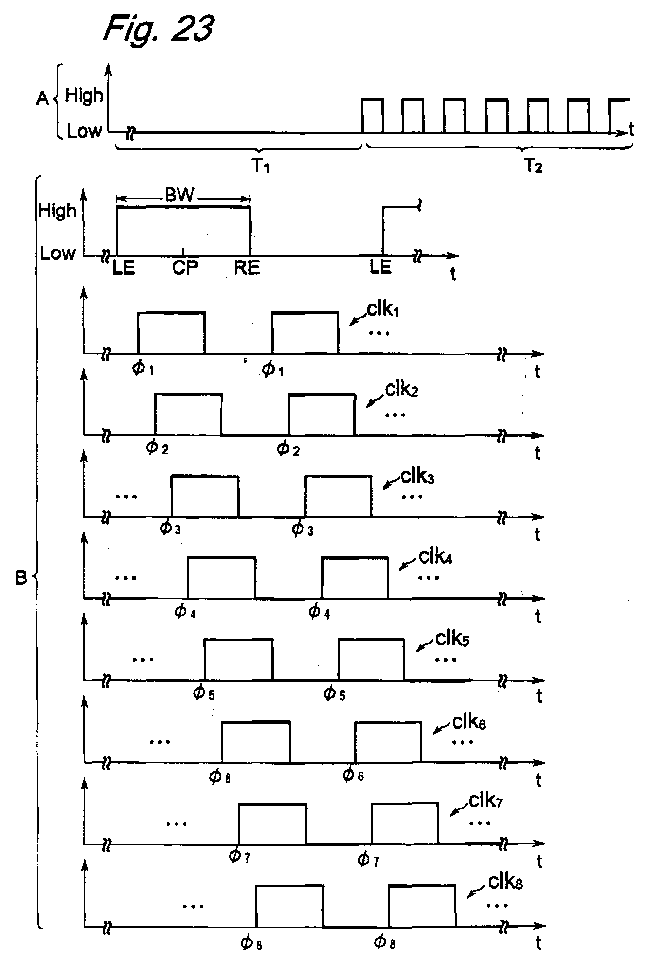

FIG. 20 is a block diagram showing the structure of an optical receiving circuit 20 according to the third embodiment of the present invention. FIGS. 21 to 23 each indicate a signal waveform in the main part of the optical receiving circuit 20.

In FIG. 20, the optical receiving circuit 20 is placed in an optical transmission system of the burst-mode. Compared with the optical receiving circuit 14 (see FIG. 19), the optical receiving circuit 20 is provided with a linear amplifying circuit 21, a comparing circuit 22, and a communication controller 23 as alternatives to the preamplifier 16, the linear amplifying circuit 17, the reference signal generator 18, and the comparator 19. There is no more difference therebetween, thus other components share the same reference numerals.

At the transmitting end of the optical transmission system, an electrical-optical conversion device of a semiconductor laser, for example, is driven by electrical burst-mode data, and an optical burst-mode signal having such waveform as exemplarily shown in FIG. 21A is generated. More specifically, the burst-mode data is generated in the signal period $T_2$ in FIG. 21A, and only therein, the electrical-optical conversion device responds to the burst-mode data for light emission or extinction. The optical burst-mode signal is thus generated, and time intervals except the signal period $T_2$ become the non signal period $T_1$.

Further, the optical burst-mode signal is a single-phase signal, which takes either a level equal to or higher than a reference value $V_1$ (base value) or a level equal to or lower. FIG. 21A exemplarily shows a single-phase signal varies only in the level equal to or higher than the reference level $V_1$. Herein, the reference value $V_1$ is equal to "Low" for the single-phase signal.

The optical/electrical conversion device 15 receives such optical burst-mode signal. The optical/electrical conversion device 15 subjects the received optical burst-mode signal to optical-electrical conversion, and generates an electrical burst-mode signal responding to light emission or extinction of the electrical-optical conversion for output to the signal period $T_2$. The electrical burst-mode signal is also a single-phase signal as is the optical burst-mode signal, and is transmitted to the linear amplifying circuit 21. Contrarily, the optical/electrical conversion device 15 outputs no signal to the non signal period $T_1$ since the electrical-optical conversion device remains extinguished.

The linear amplifying circuit 21 in FIG. 20 is preferably implemented as the one disclosed in United States Patent No. 5875049. The linear amplifying circuit 21 converts the single-phase signal provided by the optical/electrical conversion device 15 into a bi-phase signal. The bi-phase signal is then so amplified as to be in a constant amplitude level by automatic gain control (AGC) of the linear amplifying circuit 21. The linear amplifying circuit 21 also generates a reference signal for use in the comparing circuit 22 subsequent thereto.

A waveform $\alpha$ in FIG. 21B indicates the bi-phase signal generated in the linear amplifying circuit 21. As is obvious from the drawing, the bi-phase signal varies in both levels (positive and negative) with reference to a reference value $V_2$. The reference value $V_2$ indicates a level of the bi-phase signal in the non signal period $T_1$. A waveform $\beta$ in FIG. 21B indicates the reference signal generated by the linear-amplifying circuit 21. When generated in the linear amplifying circuit 21, the reference signal is in a constant level, which is substantially equal to the reference value $V_2$. In other words, the reference signal is set equal to an intermediate value of the amplification of the bi-phase signal. Accordingly, the waveform $\alpha$ of the bi-phase signal overlaps with the waveform $\beta$ of the reference signal. Strictly, as indicated in a dot-lined ellipse in FIG. 21B, a thermal noise component occurred in the linear amplifying circuit 21 is superimposed on the bi-phase signal. The waveform $\alpha$ thereof thus fluctuates in the positive and negative directions with respect to the waveform $\beta$ of the reference signal. Such bi-phase signal and the reference signal are both forwarded to the comparing circuit 22 as shown in FIG. 20.

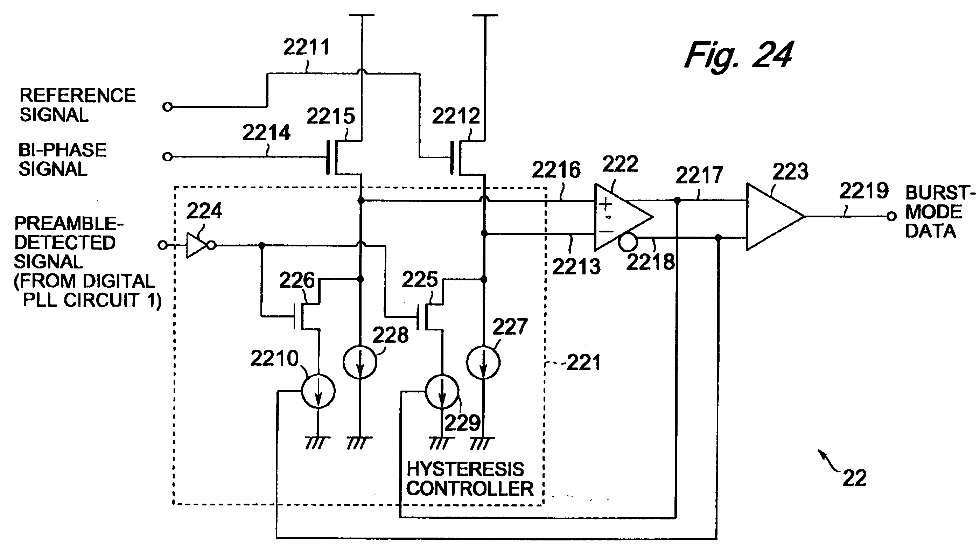

FIG. 24 is a block diagram showing the detailed structure of the comparing circuit 22. In FIG. 24, the comparing circuit 22 includes, as main components, a hysteresis controller 221, a comparator 222, and a differential amplifier 223. The hysteresis controller 221 includes an inverter 224, a first transistor 225, a second transistor 226, a first current source 227, a second current source 228, a first voltage-driven current source 229, and a second voltage-driven current source 2210. The structure of the comparing circuit 22 is described in detail next below.

A gate of a third transistor 2212 is provided with the reference signal outputted from the linear amplifying circuit 21 through a signal line 2211. The third transistor 2212 is used as a source follower. To a source of the third transistor 2212, the first current source 227 is coupled. Between the source of the third transistor 2212 and the first current source 227, one end of a signal line 2213 is connected. The other end thereof is coupled to a negative (-) input terminal of the comparator 222.

A gate of a fourth transistor 2215 is provided with the bi-phase signal outputted from the linear amplifying circuit 21 through a signal 2214. The fourth transistor 2215 is used as a source follower. To a source of the fourth transistor 2215, the second current source 228 is coupled. Between the source of the fourth transistor 2215 and the second current source 228, one end of a signal line 2216 is connected. The other end thereof is coupled to a positive (+) input terminal of the comparator 222. To an output end of the comparator 222, signal lines 2217 and 2218 are connected. The signal lines 2217 and 2218 are respectively connected to an input end of the differential amplifier 223. To an output end thereof, a signal line 2219 is connected.

The signal lines 2217 and 2218 are both branched in partway. The branched signal lines 2217 and 2218 are coupled to the first and second voltage-driven current sources 229 and 2210.

Herein, currents generated in the first and second current sources 227 and 228 are equal in value, and currents generated in the first and second voltage-driven current sources 229 and 2210 are also equal in value.

As shown in FIG. 20, to the comparing circuit 22, a PREAMBLE-DETECTED signal similar to the one in the first embodiment is fed back from the digital PLL circuit 1. More specifically, the PREAMBLE-DETECTED signal is forwarded to the inverter 224 shown in FIG. 24. The inverter 224 inverts the received PREAMBLE-DETECTED signal therein. An output signal from the inverter 224 is a binary signal indicating both "High" and "Low" as shown in FIG. 21C. FIG. 21C shows a negative logic, and thus "High" indicates that the head of the burst-mode data is not yet detected, i.e., indicates the non signal period $T_1$. Contrarily, "Low" indicates that the head of the burst-mode data is already detected, i.e., indicates the signal period $T_2$. Such output signal from the inverter 224 is forwarded to each gate terminal of the first and second transistors 225 and 226. Each source of the first and second transistors 225 and 226 are coupled to the first and second voltage-driven current sources 229 and 2210. A drain of the first transistor 225 is connected to the first current source 227, and a drain of the second transistor 226 is connected to the second current source 228.

The first and second transistors 225 and 226 are put ON when the output signal from the inverter 224 indicates "High", i.e., when the head of the burst-mode data is not yet detected (substantially non signal period $T_1$). Contrarily, when the output signal indicates "Low", i.e., when the head of the burst-mode data is already detected (substantially signal period $T_2$), the first and second transistors 225 and 226 are put OFF. In response thereto, the hysteresis controller 221 differently operates between the non signal period $T_1$ and the signal period $T_2$. For convenience, It is first described how the comparing circuit 22 operates in the signal period $T_2$, and then in the non signal period $T_1$.

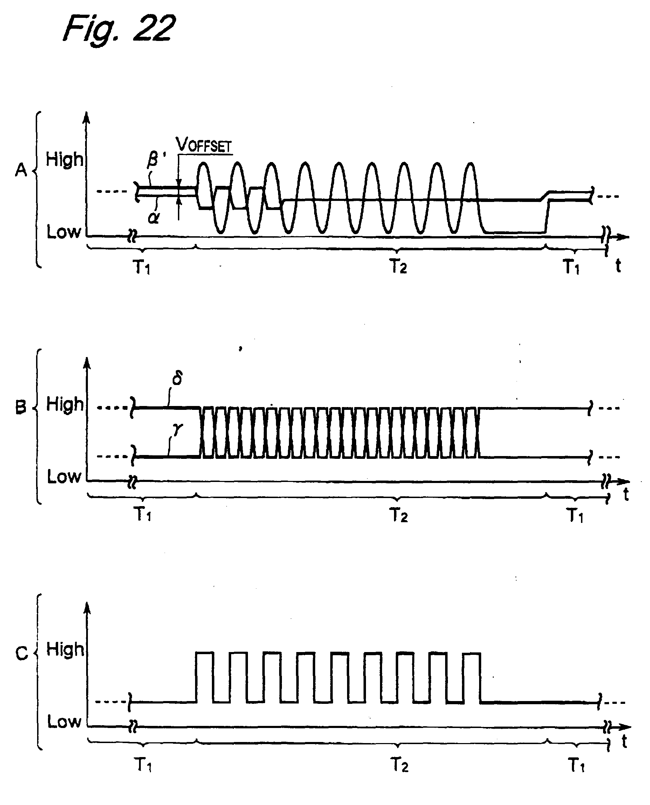

In the signal period $T_2$, the first and second transistors 225 and 226 are both put OFF, and thus the hysteresis controller 221 does not operate. Therefore, electrical current $I_1$ and $I_2$ respectively passing through drain-source of the third and fourth transistors 2212 and 2215 are equal in value. Taking this into consideration, $V_3 = V_4$ is satisfied, where $V_3$ denotes voltage between an electric potential of the signal line 2211 coupled to the gate of the third transistor 2212 and that of the signal line 2213 coupled to the source thereof, and $V_4$ denotes voltage between an electric potential of the signal line 2214 coupled to the gate of the fourth transistor 2215 and that of the signal line 2216 coupled to the source thereof. Accordingly, in the signal period $T_2$, the negative input terminal of the comparator 222 is provided with the value of the reference signal without any change. As to the positive input terminal thereof, the bi-phase signal is provided as it is through the signal lines 2214 and 2216. In this case, the comparator 222 compares the value of the bi-phase signal provided to the positive input terminal with a constant threshold value (reference signal), and then outputs a positive-phase output (see waveform γ in FIG. 22B) indicating the result to the signal line 2217. Further, the comparator 222 outputs a negative-phase (see waveform δ in FIG. 22B) obtained by inverting the positive-phase to the signal line 2218. These positive-phase output and negative-phase output are both forwarded to the differential amplifier 223 as differential signals. The differential amplifier 223 recovers the electrical burst-mode data by converting the received differential signals into the single-phase signals. The burst-mode data recovered thereby is outputted to the subsequent digital PLL circuit 1 through the signal line 2219.

In the non signal period $T_1$, on the other hand, the first and second transistors 225 and 226 are both put ON, and thus the hysteresis controller 221 operates. For example, when the result obtained by the comparator 222 indicates "High", i.e., when the bi-phase signal is larger in value than the reference signal, the positive-phase output indicates "High" and the negative-phase output "Low". The positive-phase output indicating "High" is provided to the first voltage-driven current source 229 through the signal line 2217, whereby the electrical current passing therethrough is in a predetermined value. On the other hand, the second voltage-driven current source 2210 is provided with the negative-phase output indicating "Low" through the signal line 2218. The second voltage-driven current source 2210, however, does not operate thereby, therefore no current passes therethrough.

Further, since the first transistor 225 is put ON, the current generated in the first voltage-driven current source 229 passes through drain-source of the third transistor 2212. Accordingly, a voltage $V_5$ between an electrical potential of the signal line 2211 coupled to the gate of the third transistor 2212 and that of the signal line 2213 coupled to the source thereof becomes larger than the above-described voltage $V_3$. As to the second voltage-driven current source 2210, without electrical current passing therethrough, a voltage $V_6$ between an electrical potential of the signal line 2214 coupled to the gate of the fourth transistor 2215 and that of the signal line 2216 coupled to the source thereof becomes equal to the above-described voltage $V_4$. Therefore, the negative input terminal of the comparator 222 is lowered in input level compared with the positive input terminal thereof. In other words, the value of the reference signal becomes smaller than the reference value $V_2$ of the bi-phase signal.

Next, it is described a case where the result obtained by the comparator 222 contrarily indicates "Low". With the positive-phase output indicating "Low" and the negative-phase output "High", the second voltage-driven current source 2210 has an electrical current in a predetermined value passing therethrough but the first voltage-driven current source 229. The current generated in the second voltage-driven current source 2210 passes through drain-source of the fourth transistor 2215. Accordingly, a voltage $V_7$ between an electrical potential of the signal line 2214 coupled to the gate of the fourth transistor 2215 and that of the signal line 2216 coupled to the source thereof becomes larger than the above-described voltage $V_4$. As to the first voltage-driven current source 229, without electrical current passing therethrough, a voltage $V_8$ between an electrical potential of the signal line 2211 coupled to the gate of the third transistor 2212 and that of the signal line 2213 coupled to the source thereof becomes equal to the above-described voltage $V_3$. Therefore, the negative input terminal of the comparator 222 becomes higher in an input level than the positive input terminal. In other words, the value of the reference signal becomes larger than the reference value $V_2$ of the bi-phase signal.

As is described in the foregoing, the hysteresis controller 221 changes the value of the reference signal only in the non signal period $T_1$.

Hereinafter, it is described in detail how the comparing circuit 22 operates when received the reference signal and the bi-phase signal shown in FIG. 21B. When the output signal from the inverter 224 shown in FIG. 21C indicates "High" (substantially without-signal $T_1$), as stated above, the reference signal provided to the signal line 2211 and the bi-phase signal provided to the signal line 2214 are substantially equal in value (see FIG. 21B). In the non signal period $T_1$, however, with the above-described hysteresis controller 221 operated, the reference signal provided to the negative input terminal of the comparator 222 is in a value, which is an offset value $V_{OFFSET}$ added to the initial voltage (=$V_2$). The offset value $V_{OFFSET}$ is preferably a value about double or three-times more than a dispersion value of the thermal noise component superimposed on the bi-phase signal in the linear amplifying circuit 21. With the offset value $V_{OFFSET}$, as shown in FIG. 22A, the reference signal provided to the negative input terminal is set slightly higher in value than the bi-phase signal to the positive input terminal.

Even in the non signal period $T_1$, the level of the bi-phase signal varies due to the thermal noise component superimposed in the linear amplifying circuit 21. With the reference signal set preferably about double or three-times more than the distribution value of the thermal noise component, the level of the bi-phase signal hardly exceeds the value of the reference signal. In other words, the possibility for the comparator 222 to have a result indicating "High" is considerably reduced, and the non signal period $T_1$ never has an invariable value taking both "High" and "Low". Resultantly, as shown in FIG. 22C, an output from the differential amplifier 223 is approximately constant in "Low".

Further, as shown in FIGS. 21B and 21C, even if the output signal from the inverter 224 is changed from "High" to "Low" (substantially from non signal period $T_1$ to signal period $T_2$), the value of the reference signal provided to the signal line 2211 is equal to the reference value $V_2$ (average) of the bi-phase signal provided to the signal line 2214. In the signal period $T_2$, however, without the hysteresis controller 221 operated, the value of the reference signal provided to the negative input terminal remains in the value $V_2$ as shown in FIG. 22A. The comparator 222 compares an intermediate value of the bi-phase signal with the value of the bi-phase signal itself, thus the burst-mode data being the electrical signal outputted from the differential amplifier 223 hardly has pulse width distortion. Thus, the SN ratio of the burst-mode data is prevented from being lowered as is correctly discriminated at the center of the amplitude.

Herein, the communication controller 23 shown in FIG. 20 is previously informed of an approximate time when the burst-mode data is over. When the time draws near, the communication controller 23 generates a reset signal. The reset signal is forwarded to the linear amplifying circuit 21 and the digital PLL circuit 1. A gain of the AGC amplifier is reset to the initial value. The digital PLL circuit 1, on the other hand, sets the PREAMBLE-DETECTED signal to "Low". With such PREAMBLE-DETECTED signal, the output signal from the inverter 224 is changed to indicate "High", and thus the hysteresis controller 221 starts operation. As a result, even if the reference signal and bi-phase signal equal in value are provided, the burst-mode data outputted from the comparing circuit 22 always indicates "Low".

Note that, in the description above, the comparing circuit 22 receives the bi-phase signal. The structure is only preferable but not restrictive, and thus the single-phase signal may be provided to the comparing circuit 22 without any change, although the bi-phase signal varying in level in positive and negative directions with respect to the reference value $V_2$ being more advantageous. This is because, with such bi-phase signal, the comparing circuit 22 can perform comparison processing with accuracy by using the reference signal having the reference value V2 set even if the amplitude level of the bi-phase signal is not sufficiently amplified in the linear amplifying circuit 21. Contrarily, the single-phase signal takes only either positive or negative with respect to the reference value $V_1$. Therefore, if the amplitude level thereof is not sufficiently amplified, the comparing circuit 22 may not correctly perform the comparison processing.

In the above, although the comparing circuit 22 is set to receive the reference signal from the linear amplifying circuit 21, the comparing circuit 22 may be set to receive the reference signal from a reference power supply which is not shown.

Next, the digital PLL circuit 1 in FIG. 20 is described. Since the digital PLL circuit 1 in FIG. 20 is structurally and operationally similar to the one in the first embodiment, the description is made only to additional technical effects obtainable by the hysteresis controller 221.

In the third embodiment, the hysteresis controller 221 controls the reference signal and thus the digital PLL circuit 1 hardly receives a signal invariable in value even in the non signal period $T_1$. For convenience herein, as in the first embodiment, the digital PLL circuit 1 is assumed to receive randomly-generating data having "High" and "Low" in the non signal period $T_1$. With this assumption, if the sampling circuit 3 samples such randomly-generating data utilizing the clock signals $clk_1$ to $clk_8$ as shown in FIGS. 2A and 2B, a signal to be outputted therefrom as $1^{st}$ to $8^{th}$ sampled burst mode data may have a 50/50 (0.5) possibility for "High" or "Low".

Consequently, as described in the first embodiment, the AND gates $441_1$ to $441_8$ output "High" with the probability obtained by the following equation (1).

$$Pe_1 = (0.5^7)^5 = 2.9 * 10^{(-11)} \qquad (1)$$

Further, the AND gates $445_1$ to $445_8$ in FIG. 5 output "High" with the probability obtained by the following equation (2).

$$Pe_2 = (0.5^6)^6 = 1.5 * 10^{(-11)} \qquad (2)$$

Still further, the AND gates $449_1$ to $449_8$ in FIG. 6 output "High" with the probability obtained by the following equation (3).

$$Pe_3 = (0.5^5)^7 = 2.9 * 10^{(-11)} \qquad (3)$$

As described in the first embodiment, these probability $Pe_1$, $Pe_2$, and $Pe_3$ each denote a probability for erroneously detecting, as the head of the burst-mode data, an incoming signal whose value is invariable. Herein, for a communication system requiring a bit error rate of $10^{(-9)}$ for transmission quality, the probabilities $Pe_1$, $Pe_2$, and $Pe_3$ are regarded as being sufficiently small. Therefore, even if any bit error is caused in the digital PLL circuit 1 due to the erroneous detection of the head, there is no problem for practical use. Herein, as stated above, with the hysteresis controller 221 incorporated into the optical receiving circuit of the present invention, actual probabilities $Pe_1$, $Pe_2$, and $Pe_3$ are smaller than the ones obtained by equations (1) to (3). It means that the optical receiving circuit 20 has a lower possibility for causing the bit error than the optical receiving circuit 14.

While the invention has been described in detail, the foregoing description is in all aspects illustrative and not restrictive. It is understood that numerous other modifications and variations can be devised without departing from the scope of the invention.

**Claims**

1. A digital PLL circuit (1) recovering a clock signal according to received burst-mode data, and adjusting a phase thereof in such a manner as to synchronize with an optimal position of each bit of the burst-mode data, the circuit comprising:

   a clock generator (2) generating, from a system clock, $n$ clock signals (where $n$ is a positive integer) having different phases one another by $1/n$;
   a sampling circuit (3) generating $1^{st}$ to $n^{th}$ sampled burst-mode data by sampling said burst-mode data utilizing the $n$ clock signals generated by said clock generator;
   a preamble detector (4) detecting a head of said burst-mode data from the $1^{st}$ to $n^{th}$ sampled burst-mode data generated by said sampling circuit, and also detecting an optimal phase potion for the head of the burst-mode data by referring to phase positions of the $n$ clock signals generated by said clock generator; and
   a clock phase adjuster (5) detecting an edge position of said burst-mode data from the $1^{st}$ to $n^{th}$ sampled burst-mode data generated by said sampling circuit, and according to the detected edge position, adjusting the phase positions of the clock signals with reference to the optimal phase position detected by said preamble detector.

2. The digital PLL circuit as claimed in claim 1, wherein said clock phase adjuster

   finds, every time the edge position is detected, a center point of the bit according to the detected edge position,
   finds and stores an evaluation value relevant to a shift between the recently-set optimal phase position and the center point of the bit,
   calculates, after the evaluation value is calculated for x times, an average for the recently-stored x evaluation values, and
   adjusts the phase positions of the clock signals according to the calculated average.

3. The digital PLL circuit as claimed in claim 1, wherein, when said preamble detector detects the head of the burst-mode data, said clock phase adjuster starts to detect the edge positions of the burst-mode data from the $1^{st}$ to $n^{th}$ sampled burst-mode data generated by said sampling circuit.

4. The digital PLL circuit as claimed in claim 1, wherein said burst-mode data previously has an identification pattern set for specifying the head thereof, and

said preamble detector comprises:

*n* shift registers (41) for holding the $1^{st}$ to $n^{th}$ sampled burst-mode data generated by said sampling circuit;

*n* decoders (42) each subsequently connected to said *n* shift registers, and determining whether or not a bit pattern held by the corresponding shift register matches to the identification pattern; and

an identification pattern detector (44) detecting the identification pattern from said burst-mode data according to a result determined by said *n* decoders.

**5.** The digital PLL circuit as claimed in claim 4, wherein the number of bits *i* held by each of said shift registers is predetermined, wherein

when any one or more of said decoders determines that a pattern of j bits (where *j* is a natural number satisfying $j=i$) out of the *i* bits held by the corresponding shift register matches to the identification pattern, said identification pattern detector decides that the identification pattern is detected from said burst-mode data.

**6.** The digital PLL circuit as claimed in claim 5, wherein, when a series of q (where *q* is a natural number satisfying $q<n$) said decoders determine that a pattern of recent *k* bits (where *k* is a natural number satisfying $k<j$) out of the *i* bits held by each corresponding shift register matches to the identification pattern, said identification pattern detector decides that the head of said burst-mode data is detected, wherein

said numbers *q* and *k* are so selected as to satisfy a bit error rate required for transmission quality.

**7.** The digital PLL circuit as claimed in claim 4, wherein said preamble detector further includes an initial phase position detector (45) detecting a center point of bits at the head of said burst-mode data from the result determined by said *n* decoders, and determining the detected center point as the optimal phase position for the clock signals.

**8.** The digital PLL circuit as claimed in claim 1, wherein said clock phase adjuster includes an edge detector (52) detecting the edge positions of each bit of said burst-mode data, wherein

said edge detector includes:

an exclusive OR circuit (521) calculating an exclusive OR, and detecting a transition point from Low" to "High" or from "High" to "Low" in the burst-mode data; and

a decision circuit (522) determining whether or not continuity of "High" or "Low" is observed after the transition point detected by said exclusive OR circuit, wherein

only when the continuity of "High" or "Low" is determined by said determination circuit, the transition point detected by said exclusive OR circuit is detected as the edge positions of the burst-mode data.

**9.** The digital PLL circuit as claimed in claim 1, further comprising a discriminator (66) discriminating, based on the phase positions adjusted by said clock phase adjuster, a bit to be received from the $1^{st}$ to $n^{th}$ sampled burst-mode data generated by said sampling circuit.

**10.** The digital PLL circuit as claimed in claim 9, wherein said discriminator includes:

a selector (61) selecting, based on the phase positions adjusted by said clock phase adjuster, $1^{st}$ to $p^{th}$ (where *p* is a natural number satisfying $p \leq n$) sampled burst-mode data from the $1^{st}$ to $n^{th}$ sampled burst-mode data generated by said sampling circuit, and

a decision circuit (62) determining, by majority, the bit to be received from the $1^{st}$ to $P^{th}$ sampled burst-mode data selected by said selector.

**11.** The digital PLL circuit as claimed in claim 1, further comprising an elastic buffer (64) into which the bit discriminated by said discriminator is written according to the clock signals having the phase positions optimally adjusted by said clock phase adjuster, wherein

the bit written into said elastic buffer is read according to said system clock.

**12.** The digital PLL circuit as claimed in claim 11, wherein writing and reading into/from said elastic buffer are done when said preamble detector detects the head of said burst-mode data.

**13.** An optical receiving circuit (14) receiving an optical burst-mode signal, comprising:

an optical/electrical conversion device (15) converting the received optical burst-mode signal into an electrical signal;

an amplifier (16, 17) amplifying the electrical signal converted by said optical/electrical device;

a comparator (19) converting the electrical signal provided by said amplifier into digital data by comparing the electrical signal and a given reference signal; and

a digital PLL circuit (1) receiving the digital data converted by said comparator, recovering a clock signal according to the burst-mode data, and adjusting a phase thereof in such a manner as to synchronize with an optimal position of each bit of the burst-mode data, wherein said digital PLL circuit (1) comprises:

a clock generator generating, from a system clock, $n$ clock signals (where $n$ is a positive integer) having different phases one another by $1/n$;

a sampling circuit generating 1st to $n$th sampled burst-mode data by sampling said burst-mode data utilizing the $n$ clock signals generated by said clock generator;

a preamble detector detecting a head of said burst-mode data from the 1st to $n$th sampled burst-mode data generated by said sampling circuit, and also detecting an optimal phase potion for the head of the burst-mode data by referring to phase positions of the $n$ clock signals generated by said clock generator; and

a clock phase adjuster detecting an edge position of said burst-mode data from the 1st to $n$th sampled burst-mode data generated by said sampling circuit, and according to the detected edge position, adjusting the phase positions of the clock signals with reference to the optimal phase position detected by said preamble detector.

14. An optical receiving circuit (20) receiving an optical burst-mode signal, comprising:

an optical/electrical conversion device (15) converting the received optical burst-mode signal into an electrical signal;

an amplifying circuit (21) amplifying the electrical signal converted by said optical/electrical device;

a comparing circuit (22) provided with a hysteresis characteristic which generates a reference signal variable in value, and compares the reference signal and the electrical signal amplified by said amplifying circuit for output as burst-mode data; and

a digital PLL circuit (1) detecting the head of the burst-mode data provided by said comparing circuit, generating a PREAMBLE-DETECTED signal being a signal specifying the head, and then starting optimally adjusting the phase position of the clock signal recovered from the burst-mode data, wherein

said digital PLL circuit further feeds back the generated PREAMBLE-DETECTED signal to said comparing circuit, and

in response to the PREAMBLE-DETECTED signal fed back from said digital PLL circuit, said comparing circuit changes a value of the reference signal.

15. The optical receiving circuit as claimed in claim 14, wherein the PREAMBLE-DETECTED signal generated by said digital PLL circuit indicates whether or not said head is detected/undetected, wherein

said comparing circuit includes

a hysteresis controller (221) generating, in response to the PREAMBLE-DETECTED signal fed back from said digital PLL circuit, the reference signal variable in value; and

a comparator (222) comparing the reference signal from said hysteresis controller and the electrical signal from said amplifying circuit, wherein

said hysteresis controller

generates the reference signal having the same value as a reference value of the electrical signal from said amplifying circuit if the received PREAMBLE-DETECTED signal indicates that said head is detected, and

generates the reference signal in a value being offset the reference value of the electrical signal from said amplifying circuit by a given value if the received PREAMBLE-DETECTED signal indicates that said head is undetected.

16. The optical receiving circuit as claimed in claim 15, wherein the electrical signal provided to said comparator is a bi-phase signal.

17. The optical receiving circuit as claimed in claim 15, wherein said given value is selected to be about double or three-times more than a distribution value of a thermal noise component occurred in said amplifying circuit.

18. The optical receiving circuit as claimed in claim 14, wherein said digital PLL circuit comprises:

a clock generator (2) generating, from a system clock, $n$ clock signals (where $n$ is a positive integer) having different phases one another by

$1/n$;

a sampling circuit (3) generating 1st to $n$th sampled burst-mode data by sampling said burst-mode data utilizing the $n$ clock signals generated by said clock generator;

a preamble detector (4) detecting a head of said burst-mode data from the 1st to $n$th sampled burst-mode data generated by said sampling circuit, and also detecting an optimal phase potion for the head of the burst-mode data by referring to phase positions of the $n$ clock signals generated by said clock generator; and

a clock phase adjuster (5) detecting an edge position of said burst-mode data from the 1st to $n$th sampled burst-mode data generated by said sampling circuit, and according to the detected edge position, adjusting the phase positions of the clock signals with reference to the optimal phase position detected by said preamble detector, wherein

said preamble detector feeds back the generated PREAMBLE-DETECTED signal to said comparing circuit.

19. The optical receiving circuit as claimed in claim 18, wherein said clock phase adjuster

finds, every time the edge position is detected, a center point of the bit according to the detected edge position,

finds and stores an evaluation value relevant to a shift between the recently-set optimal phase position and the center point of the bit,

calculates, after the evaluation value is calculated for x times, an average for the recently-stored x evaluation values, and

adjusts the phase positions of the clock signals according to the calculated average.

20. The optical receiving circuit as claimed in claim 18, wherein, when received said PREAMBLE-DETECTED signal from said preamble detector, said clock phase adjuster starts to detect the edge positions of the burst-mode data outputted from the comparing circuit utilizing the 1st to $n$th sampled burst-mode data generated by said sampling circuit.

21. The optical receiving circuit as claimed in claim 18, wherein the burst-mode data outputted from said comparing circuit previously has an identification pattern set for specifying the head thereof, and

said preamble detector comprises:

$n$ shift registers (41) for holding the 1st to $n$th sampled burst-mode data generated by said sampling circuit;

$n$ decoders (42) each subsequently connected to said $n$ shift registers, and determining whether or not a bit pattern held by the corresponding shift register matches to the identification pattern; and

an identification pattern detector (44) detecting the identification pattern according to a result determined by said $n$ decoders.

22. The optical receiving circuit as claimed in claim 21, wherein the number of bits $i$ held by each of said shift registers is predetermined, wherein

when any one or more of said decoders determines that a pattern of j bits (where $j$ is a natural number satisfying $j=i$) out of the $i$ bits held by the corresponding shift register matches to the identification pattern, said identification pattern detector decides that the identification pattern is detected.

23. The optical receiving circuit as claimed in claim 22, wherein, when a series of $q$ (where $q$ is a natural number satisfying $q<n$) said decoders determine that a pattern of recent $k$ bits (where $k$ is a natural number satisfying $k<j$) out of the $i$ bits held by each corresponding shift register matches to the identification pattern, said identification pattern detector decides that said identification pattern is detected, wherein

said numbers $q$ and $k$ are so selected as to satisfy a bit error rate required for transmission quality.

24. The optical receiving circuit as claimed in claim 21, wherein said preamble detector further includes an initial phase position detector (45) estimating a center point of bits in said identification pattern using the result determined by said $n$ decoders, and regarding the estimated center point as the optimal phase position for the clock signals.

25. The optical receiving circuit as claimed in claim 18, wherein said clock phase adjuster includes an edge detector (52) detecting the edge positions of each bit of said burst-mode data outputted from said comparing circuit, wherein

said edge detector includes:

an exclusive OR circuit (521) calculating an exclusive OR, and detecting a transition point from "Low" to "High" or from "High" to "Low" in the burst-mode data outputted from said comparing circuit; and

a decision circuit (522) determining whether or not continuity of "High" or "Low" is observed after the transition point detected by said exclusive OR circuit, wherein

only when the continuity of "High" or "Low" is determined by said determination circuit, the transition point detected by said exclusive OR circuit is detected as the edge positions of the burst-mode data.

26. The optical receiving circuit as claimed in claim 18, further comprising a discriminator (66) discriminating, based on the phase positions adjusted by said clock phase adjuster, a bit to be received from the $1^{st}$ to $n^{th}$ sampled burst-mode data generated by said sampling circuit.

27. The optical receiving circuit as claimed in claim 26, wherein said discriminator includes:

a selector (61) selecting, based on the phase positions adjusted by said clock phase adjuster, $1^{st}$ to $p^{th}$ (where $p$ is a natural number satisfying $p \leq n$) sampled burst-mode data from the $1^{st}$ to $n^{th}$ sampled burst-mode data generated by said sampling circuit; and
a decision circuit (62) determining, by majority, the bit to be received from the $1^{st}$ to $P^{th}$ sampled burst-mode data selected by said selector.

28. The optical receiving circuit as claimed in claim 18, further comprising an elastic buffer (64) into which the bit discriminated by said discriminator is written according to the clock signals having the phase positions optimally adjusted by said clock phase adjuster, wherein

the bit written into said elastic buffer is read according to said system clock.

29. The optical receiving circuit as claimed in claim 28, wherein writing and reading into/from said elastic buffer are controlled by the PREAMBLE-DETECTED signal generated by said preamble detector.

EP 1 061 691 A2

*Fig. 1*

# Fig. 2

Fig. 3

EP 1 061 691 A2

## Fig. 4

TO OR
GATE 4413
(SEE FIG. 6)

# Fig. 5

$42_{12}$
$42_{22}$
$42_{32}$
$42_{42}$
$42_{52}$
$42_{62}$

$42_{72}$

$42_{82}$

$445_1$

$446_1$

$445_2$

$446_2$

$445_3$

$446_3$

$445_4$

$446_4$

$445_5$

$446_5$

$445_6$

$446_6$

$445_7$

$446_7$

$445_8$

$446_8$

44

447

448

TO OR
GATE 4413
(SEE FIG. 6)

## Fig. 6

FROM OR GATE 443

FROM OR GATE 447 — 444

$42_{13}$
$42_{23}$
$42_{33}$
$42_{43}$
$42_{53}$
$42_{63}$
$42_{73}$

$42_{83}$

$449_1$ 448

$4410_1$

$449_2$

$4410_2$

$449_3$

$4410_3$

$449_4$

$4410_4$ 4411

$449_5$

$4410_5$

$449_6$

$4410_6$

$449_7$

$4410_7$ 44

$449_8$

$4410_8$

4413

4112

PREAMBLE-
DETECTED
SIGNAL

10

## Fig. 7

$442_1 \sim 442_8$

$446_1 \sim 446_8$

$4410_1 \sim 4410_8$

INITIAL PHASE POSITION DETECTOR —45

RULE

$\alpha$

INITIAL PHASE POSITION

11

## Fig. 8

| AND GATE OUTPUTTED "High" | CLOCK SIGNAL $clk_{OPT}$ |
|---|---|
| AND GATE $441_1$ | CLOCK SIGNAL $clk_3$ |
| AND GATE $441_2$ | CLOCK SIGNAL $clk_4$ |
| AND GATE $441_3$ | CLOCK SIGNAL $clk_5$ |
| AND GATE $441_4$ | CLOCK SIGNAL $clk_6$ |
| AND GATE $441_5$ | CLOCK SIGNAL $clk_7$ |
| AND GATE $441_6$ | CLOCK SIGNAL $clk_8$ |
| AND GATE $441_7$ | CLOCK SIGNAL $clk_1$ |
| AND GATE $441_8$ | CLOCK SIGNAL $clk_2$ |
| AND GATE $445_1$ | CLOCK SIGNAL $clk_3$ |
| AND GATE $445_2$ | CLOCK SIGNAL $clk_4$ |
| AND GATE $445_3$ | CLOCK SIGNAL $clk_5$ |
| AND GATE $445_4$ | CLOCK SIGNAL $clk_6$ |
| AND GATE $445_5$ | CLOCK SIGNAL $clk_7$ |
| AND GATE $445_6$ | CLOCK SIGNAL $clk_8$ |
| AND GATE $445_7$ | CLOCK SIGNAL $clk_1$ |
| AND GATE $445_8$ | CLOCK SIGNAL $clk_2$ |
| AND GATE $449_1$ | CLOCK SIGNAL $clk_4$ |
| AND GATE $449_2$ | CLOCK SIGNAL $clk_5$ |
| AND GATE $449_3$ | CLOCK SIGNAL $clk_6$ |
| AND GATE $449_4$ | CLOCK SIGNAL $clk_7$ |
| AND GATE $449_5$ | CLOCK SIGNAL $clk_8$ |
| AND GATE $449_6$ | CLOCK SIGNAL $clk_1$ |
| AND GATE $449_7$ | CLOCK SIGNAL $clk_2$ |
| AND GATE $449_8$ | CLOCK SIGNAL $clk_3$ |

~$\alpha$

# Fig. 9

$$\Delta \phi = \phi_1 - \phi_2 = \phi_2 - \phi_3 = \phi_3 - \phi_4$$
$$= \phi_4 - \phi_5 = \phi_5 - \phi_6 = \phi_6 - \phi_7$$
$$= \phi_7 - \phi_8 = \phi_8 - \phi_1$$

## Fig. 10

Fig. 11

Fig. 12A

Fig. 12

Fig. 12A

Fig. 12B

Fig. 12B

## *Fig. 13*

# Fig. 14

# Fig. 15

# Fig. 16

Fig. 17

# Fig. 18

RETARD       $\phi$ OPT       ADVANCE

SELECTION

## Fig. 19

OPTICAL
BURST-MODE
SIGNAL

15

16
PREAMPLI-
FIER

17
LINEAR
AMPLIFIER

19
COMPARA-
TOR

BURST
-MODE
DATA
(DIGITAL
DATA)

1
DIGITAL
PHASE LOCKED
LOOP CIRCUIT

13 RECOVERED
BURST-MODE
DATA

$clk_s(\phi s)$

8

18

14

EP 1 061 691 A2

Fig. 20

OPTICAL BURST-MODE SIGNAL

15

ELECTRIC BURST-MODE SIGNAL (SINGLE PHASE SIGNAL)

21
LINEAR AMPLIFIER

ELECTRIC BURST-MODE SIGNAL (BI-PHASE SIGNAL)

REFERENCE SIGNAL

22
COMPARING CIRCUIT

BURST -MODE DATA

$clk_s(\phi s)$

8

1
DIGITAL PHASE LOCKED LOOP CIRCUIT

RECOVERED BURST-MODE DATA

13

PREAMBLE-DETECTED SIGNAL

20

RESET SIGNAL

23
COMMUNICATION CONTROLLER

## Fig. 21

# Fig. 22

# Fig. 23

Fig. 24